# EUROPEAN PATENT SPECIFICATION

(11) **EP 4 098 027 B1**
(45) Date of publication and mention of the grant of the patent: **30.08.2023**
(21) Application number: 21702541.0
(22) Date of filing: 22.01.2021
(51) Int. Cl.: H04W 36/18, H04W 36/36

(54) **RADIO NETWORK NODE, USER EQUIPMENT, AND HANDOVER METHODS PERFORMED IN A COMMUNICATION NETWORK**
FUNKNETZWERKKNOTEN, BENUTZERGERÄT UND IN EINEM KOMMUNIKATIONSNETZ AUSGEFÜHRTE WEITERREICHUNGSVERFAHREN
NOEUD DE RÉSEAU RADIO, ÉQUIPEMENT D'UTILISATEUR ET PROCÉDÉS DE TRANSFERT EFFECTUÉS DANS UN RÉSEAU DE COMMUNICATION

(30) Priority: 29.01.2020 US 202062967059 P
(43) Date of publication of application: 07.12.2022
(73) Proprietor: Telefonaktiebolaget LM Ericsson (publ), 164 83 Stockholm (SE)
(72) Inventor: OHLSSON, Oscar, 167 33 Bromma (SE); DA SILVA, Icaro L. J., 170 77 Solna (SE); EKLÖF, Cecilia, 187 41 Täby (SE); RUNE, Johan, 181 29 Lidingö (SE); WALLENTIN, Pontus, 582 39 Linköping (SE)
(74) Representative: Ericsson
(86) International application number: PCT/SE2021/050036
(87) International publication number: WO 2021/154140

(56) References cited:
- QUALCOMM INCORPORATED: "LTE Mobility Robustness Enhancements for DAPS eMBB HO", 3GPP DRAFT; R2-1909844_LTE_MOBILITY_ROBUSTESS_ENHANCEM ENT FOR DAPS EMBB HO_V1.DOCX, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Prague, Czech Republic; 20190826 - 20190830 16 August 2019 (2019-08-16), XP051767636, Retrieved from the Internet: URL:http://www.3gpp.org/ftp/tsg_ran/WG2_RL 2/TSGR2_107/Docs/R2-1909844.zip [retrieved on 2019-08-16]
- NEC: "Combination of CHO and DAPS", 3GPP DRAFT; R2-1915455, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 8 November 2019 (2019-11-08), XP051817233, Retrieved from the Internet: URL:https://ftp.3gpp.org/tsg_ran/WG2_RL2/T SGR2_108/Docs/R2-1915455.zip [retrieved on 2019-11-08]
- ERICSSON: "Capability coordination for DAPS Handover", 3GPP DRAFT; R2-1914625, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 7 November 2019 (2019-11-07), XP051815686, Retrieved from the Internet: URL:https://ftp.3gpp.org/tsg_ran/WG2_RL2/T SGR2_108/Docs/R2-1914625.zip [retrieved on 2019-11-07]
- LENOVO ET AL: "LTE conditional handover", 3GPP DRAFT; R2-1904156 LTE CONDITIONAL HANDOVER_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Xi'an, China; 20190408 - 20190412 6 April 2019 (2019-04-06), XP051701469, Retrieved from the Internet: URL:http://www.3gpp.org/ftp/Meetings%5F3GP P%5FSYNC/RAN2/Docs/R2%2D1904156%2Ezip [retrieved on 2019-04-06]
- ERICSSON: "Enhancements to Make-Before-Break for dual active protocol stacks", 3GPP DRAFT; R2-1907310, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20190513 - 20190517 2 May 2019 (2019-05-02), XP051711595, Retrieved from the Internet: URL:http://www.3gpp.org/ftp/tsg%5Fran/WG2% 5FRL2/TSGR2%5F106/Docs/R2%2D1907310%2Ezip [retrieved on 2019-05-02]

## Description

### TECHNICAL FIELD

Embodiments herein relate to a first radio network node such as a source node, a user equipment (UE), and methods performed therein regarding communication in a wireless communication network. Furthermore, a computer program product and a computer-readable storage medium are also provided herein. Especially, embodiments herein relate to handling or enabling communication, e.g. handling handover of the UE, in the wireless communication network.

### BACKGROUND

In a typical wireless communication network, UEs, also known as wireless communication devices, mobile stations, stations (STA) and/or wireless devices, communicate via a Radio access Network (RAN) to one or more core networks (CN). The RAN covers a geographical area which is divided into service areas or cell areas, with each service area or cell area being served by a radio network node such as an access node e.g. a Wi-Fi access point or a radio base station (RBS), which in some radio access technologies (RAT) may also be called, for example, a NodeB, an evolved NodeB (eNodeB) and a gNodeB (gNB). The service area or cell area is a geographical area where radio coverage is provided by the radio network node. The radio network node operates on radio frequencies to communicate over an air interface with the UEs within range of the access node. The radio network node communicates over a downlink (DL) to the UE and the UE communicates over an uplink (UL) to the radio network node. The radio network node may be a distributed node comprising a remote radio unit and a separated baseband unit.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with UEs. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3^{rd} Generation Partnership Project (3GPP) and this work continues in the coming 3GPP releases, such as 5G networks. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies also known as new radio (NR), the use of very many transmit- and receive-antenna elements makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

Beamforming allows the signal to be stronger for an individual connection. On the transmit-side this may be achieved by a concentration of the transmitted power in the desired direction(s), and on the receive-side this may be achieved by an increased receiver sensitivity in the desired direction(s). This beamforming enhances throughput and coverage of the connection. It also allows reducing the interference from unwanted signals, thereby enabling several simultaneous transmissions over multiple individual connections using the same resources in the time-frequency grid, so-called multi-user Multiple Input Multiple Output (MIMO).

5G is the fifth generation of cellular technology and was introduced in Release 15 of the 3GPP standard. It is designed to increase speed, reduce latency, and improve flexibility of wireless services. The 5G system (5GS) includes both a new radio access network (NG-RAN) and a new core network (5GC).

5G is designed to support new use case requiring ultra-reliable low-latency communication (URLLC) such as factory automation and autonomous driving. To be able to meet the stringent requirements on reliability and latency also during mobility, two new handover types are introduced in 5G Release 16 called make-before-break (MBB) handover and conditional handover. These will be described in more detail below after a review of the NG-RAN architecture and the legacy handover procedure.

Overview of the NG-RAN architecture.

Similar to E-UTRAN in 4G, the NG-RAN uses a flat architecture and consists of base stations, called gNBs, which are interconnected with each other by means of the Xn-interface. The gNBs are also connected by means of the NG interface to the 5GC, more specifically to the Access and Mobility Function (AMF) by the NG-C interface and to the User Plane Function (UPF) by means of the NG-U interface. The gNB in turn supports one or more cells which provides the radio access to the UE. The radio access technology (called New Radio, NR) is orthogonal frequency division multiplexing (OFDM) based like in LTE and offers high data transfer speeds and low latency. Note that NR is sometimes used to refer to the whole 5G system although it is strictly speaking only the 5G radio access technology.

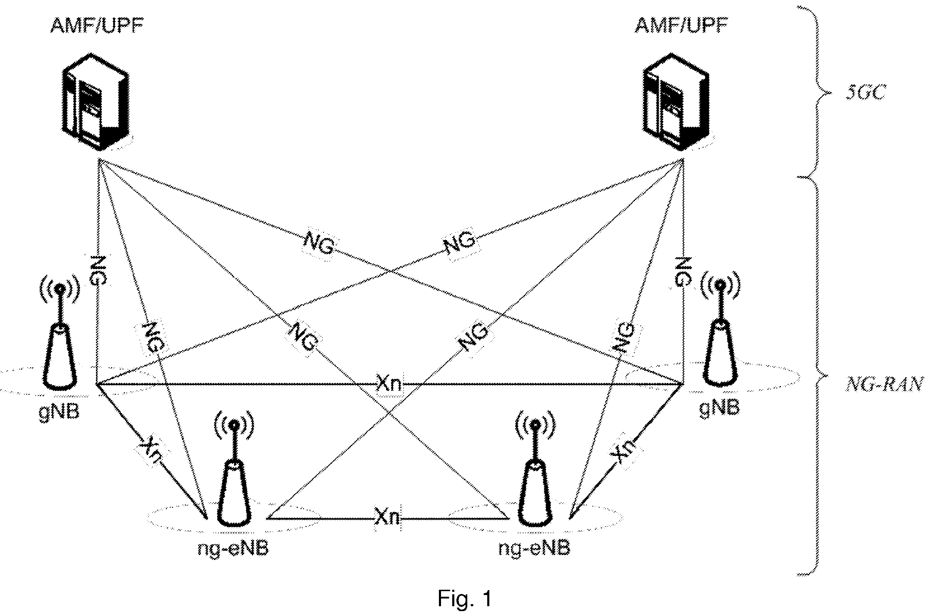

It is expected that NR will be rolled out gradually on top of the legacy LTE network starting in areas where high data traffic is expected. This means that NR coverage will be limited in the beginning and users must move between NR and LTE as they go in and out of coverage. To support fast mobility between NR and LTE and avoid change of core network, LTE eNBs will also connect to the 5G-CN and support the Xn interface. An eNB connected to 5GC is called a next generation eNB (ng-eNB) and is considered part of the NG-RAN (see **Fig. 1**). LTE connected to 5GC is described for completeness and will not be considered further in this document.

Mobility in connected state is also known as handover. The purpose of handover is to move the UE from a first radio network node a so called source node using a source radio connection (also known as source cell connection), to a second radio network node a so called target node, using a target radio connection (also known as target cell connection). The target radio connection is associated with a target cell controlled by the target access node. So, in other words, during a handover, the UE moves from the source cell to a target cell. Sometimes the source access node or the source cell is referred to as the "source", and the target access node or the target cell is sometimes referred to as the "target".

In some cases, the source access node and target access node are different nodes, such as different gNBs. These cases are referred to as inter-node or inter-gnB handover. In other cases, the source access node and target access node are the same node, such as the same gNB. These cases are referred to as intra-node or intra-gNB handover and covers the case when the source and target cells are controlled by the same access node. In yet other cases, handover is performed within the same cell (and thus also within the same access node controlling that cell) - these cases are referred to as intra-cell handover.

It should therefore be understood that the source access node and target access node refer to a role served by a given access node during a handover of a specific UE. For example, a given access node may serve as source access node during handover of one UE, while it also serves as the target access node during handover of a different UE. And, in case of an intra-node or intra-cell handover of a given UE, the same access node serves both as the source access node and target access node for that UE.

An inter-node handover can further be classified as an Xn-based or NG-based handover depending on whether the source and target node communicate directly using the Xn interface or indirectly via the core network using the NG interface. In the remainder of this document we will only consider Xn based handover although some of the handover solutions described in the following sections may also be applied to NG-based handover.

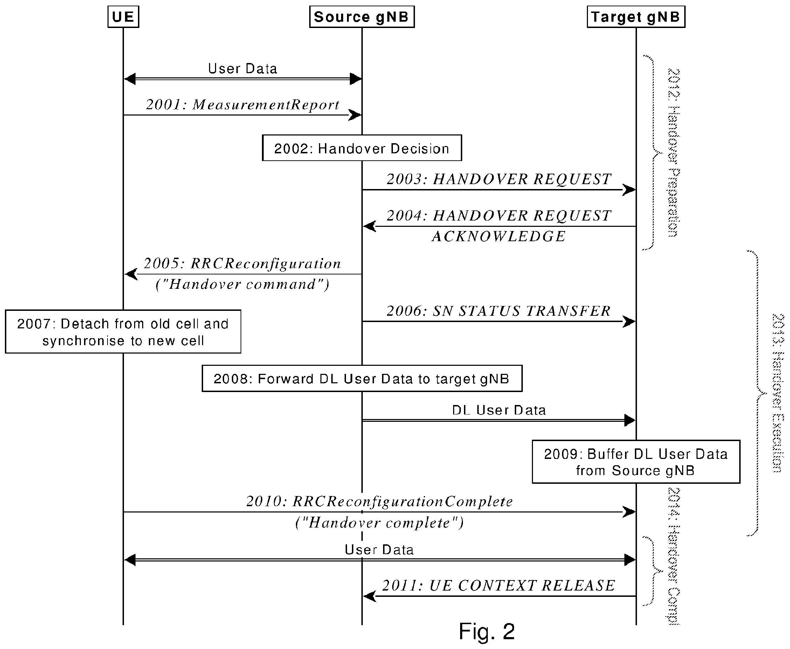

**Fig. 2** shows the signalling flow between the UE and source and target access node during an inter-node handover in NR.
**Actions 2001-2002.** The UE and source gNB have an established connection and is exchanging user data. Due to some trigger, e.g. a measurement report from the UE, the source gNB decides to handover the UE to the target gNB.
**Action 2003.** The source gNB sends a HANDOVER REQUEST to the target gNB with necessary information to prepare the handover at the target side. The information includes among other things the current source configuration and the UE capabilities.
**Action 2004.** The target gNB prepares the handover and responds with a HANDOVER REQUEST ACKNOWLEDGE to the source gNB, which includes the handover command (a *RRCReconfiguration* message) to be sent to the UE. The handover command includes information needed by the UE to access the target cell, e.g., random access configuration, a new cell radio network temporary identifier (C-RNTI) assigned by the target access node and security parameters enabling the UE to calculate the target security key so the UE can send the handover complete message (a *RRCReconfigurationComplete* message).
**Action 2005**. The source gNB triggers the handovers by sending the handover command (a *RRCReconfiguration* message) received from the target node in the previous step to the UE. The UE detaches from the old cell before synchronising and connecting to the new cell.
**Action 2006**. The source gNB stops scheduling any further DL or UL data to the UE and sends a SN STATUS TRANSFER transfer message to the target gNB indicating the latest PDCP SN transmitter and receiver status.
**Actions 2007-2008.** The source node now also starts to forward User Data to the target node, which buffers this data for now.
**Action 2009**. Target gNB buffers DL user data from source gNB.
**Action 2010**. Once the UE the has completed the random access to the target cell, the UE sends the handover complete (a *RRCReconfigurationComplete* message) to the target gNB.
**Action 2011**. Upon receiving the handover complete message, the target node can start exchanging user data with the UE. The target node also requests the AMF to switch the DL data path from the UPF from the source node to the target node (not shown). Once the path switch is completed the target node sends the UE CONTEXT RELEASE to the source node.

Rel-16 make-before-break handover is also known as Dual Active Protocol Stacks (DAPS) handover. Handovers in NR can be classified as break-before-make handover since the connection to the source cell is released before the connection to the target cell is established. Handovers in NR therefore involve a short interruption of a few tens of ms where no data can be exchanged between the UE and the network. To shorten the interruption time during handover a new type of handover, known as Dual Active Protocol Stacks (DAPS) handover, is being introduced for NR in 3GPP Rel-16. In DAPS handover the UE maintains the connection to the source cell while the connection to the target is being established. Thus, the DAPS handover can be classified as make-before-break handover. DAPS handover reduces the handover interruption but comes at the cost of increased UE complexity as the UE needs to be able to simultaneously receive/transmit from/to two cells or radio network nodes at the same time.

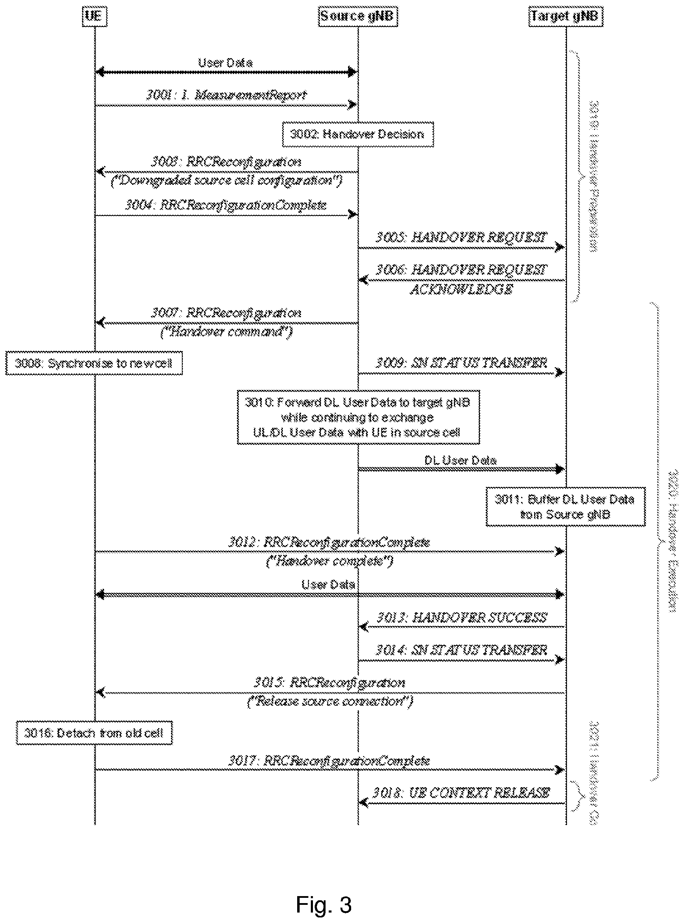

**Fig 3** shows a DAPS handover in NR.
**Actions 3001-3002.** Same as steps 2001-2002 in the legacy handover in Fig. 2.
**Actions 3003-3004.** In order to not exceed the UE capabilities when the UE is simultaneously connected to the source and target node, the source node may need to reconfigure (also known as "downgrade") the source cell connection before triggering the DAPS handover. The downgrading is performed by sending an *RRCReconfiguration* message to the UE with the new source cell configuration. After the UE has applied the new configuration it responds with a *RRCReconfigurationComplete* message.
**Actions 3005-3006.** Same as steps 3-4 in the legacy handover procedure except that the source node indicates that the handover is a DAPS handover. Also note that the current source configuration indicated in the handover request is the downgraded source configuration.
**Action 3007.** The source gNB triggers the handovers by sending the handover command (a *RRCReconfiguration* message) received from the target node in the previous step to the UE. The handover command includes an indication to perform a DAPS handover.
**Action 3008.** Upon reception of the handover command with indication of a DAPS handover, the UE starts synchronizing to the target cell. Unlike in normal handover, the UE keeps the connection in the source cell and continues to exchange UL/DL data with the source gNB even after it has received the handover command. In order to decrypt/encrypt DL/UL data, the UE needs to maintain both the source and target security key until the source cell is released. The UE can differentiate the security key to be used based on the cell which the DL/UL packet is received/transmitted on. If header compression is used the UE also needs to maintain two separate RObust Header Compression (ROHC) contexts for the source and target cell.
**Actions 3009-3011.** The source node sends a SN STATUS TRANSFER to the target node and begins to forward DL data to the target gNB. Note that data that is forwarded may also be sent to the UE in the source cell, i.e. DL data may be duplicated. The target node buffers the DL data until the UE has connected with the target cell.

Note that the Xn message for conveying the DL and (possibly) UL receiver status for early data transfer in the DAPS handover is not yet decided in 3GPP. One could either re-use the existing SN STATUS TRANSFER (as indicated in the figure) or one could define a new message called e.g. Early Forwarding Transfer.
**Action 3012.** Once the UE the has completed the random access to the target cell, the UE sends the handover complete (a *RRCReconfigurationComplete* message) to the target gNB. After this point the UE receives DL data from both source and target cell while UL data transmission is switched to the target cell.
**Action 3013.** The target gNB sends a HANDOVER SUCCESS message to the source gNB indicating the UE has successfully established the target connection.
**Action 3014.** Upon reception of the handover success indication, the source gNB stops scheduling any further DL or UL data to the UE and sends a final SN status transfer message to target gNB indicating the latest PDCP SN and HFN transmitter and receiver status.
**Actions 3015-3017.** The target gNB indicates to the UE to release the source connection by sending an RRCReconfiguration message. The UE releases the source connection ("detach from old cell") and responds with a RRCReconfigurationComplete message. From this point on, DL and UL data is only received and transmitted in the source cell.
**Action 3018.** Same as step 2011 in the legacy handover procedure in Fig. 2.

An alternative for actions 3003-3004, for reconfiguring the UE configuration in order not to exceed the UE capabilities when the UE is simultaneously connected to the source and target node, is to provide a source (downgrading) reconfiguration in the same message as the *RRCReconfiguration* containing the *Reconfiguration With Sync* for DAPS handover. That would require additional specification changes to the *RRCReconfiguration* message which could comprise:
- A source reconfiguration to be applied first when the message is received, and associated with the source's protocol stack in DAPS;
- A target reconfiguration associated with the target's protocol stack in DAPS, to be applied when connecting to the target cell. In case this reconfiguration contains delta configuration (i.e. indicating the differences between the target cell configuration and the source cell configuration), its reference is the UE's current configuration (i.e. to be applied only after the source reconfiguration in the message has been applied).

The alternative where the source cell reconfiguring reconfiguration and the target cell reconfiguration are provided in the same *RRCReconfiguration* message could possibly speed up the DAPS handover, e.g. reduced processing time, as there is a single radio resource control (RRC) message.

Handovers that are normally triggered when the UE is at the cell edge and experiences poor radio conditions. If the UE enters poor radio conditions quickly the conditions may already be so poor that the actual handover procedure may be hard to execute. If the UL is already bad it may lead to that the network is not able to detect the measurement report transmitted by the UE and hence cannot initiate the handover procedure. DL problems may lead to that the handover command (i.e. the *RRCReconfiguration* message with a *reconfiguration With Sync* field) cannot successfully reach the UE. In poor radio conditions the DL message is more often segmented, which increases the risk of retransmissions with an increased risk that the message doesn't reach the UE in time. Failed transmission of handover command is a common reason for unsuccessful handovers.

To improve mobility robustness and address the issues above, a concept known as conditional handover (CHO) is being introduced in 3GPP Release 16. The key idea in CHO is that transmission and execution of the handover command are separated. This allows the handover command to be sent earlier to UE when the radio conditions are still good, thus increasing the likelihood that the message is successfully transferred. The execution of the handover command is done at later point in time based on an associated execution condition. The execution condition is typically in the form a threshold, e.g. signal strength of candidate target cell becomes X dB better than the serving cell, so called A3 event, or signal strength of serving cell becomes worse than X dBm and signal strength of candidate target cell becomes better than Y dBm, so called A5 event.

In the context of this document, a cell for which conditional handover, or other conditional mobility procedure, is configured is denoted "candidate target cell" or "potential target cell". Similarly, a radio network node controlling a candidate/potential target cell is denoted "candidate target node" or "potential target node". In a sense, once the CHO execution condition has been fulfilled for a candidate/potential target cell and CHO execution towards this candidate/potential target cell has been triggered, this cell is no longer "potential" or a "candidate" in the normal senses of the words, since it is no longer uncertain whether the CHO will be executed towards it. Hence, after the CHO execution condition has been fulfilled/triggered, the concerned candidate/potential target cell is herein sometimes referred to as "target cell".

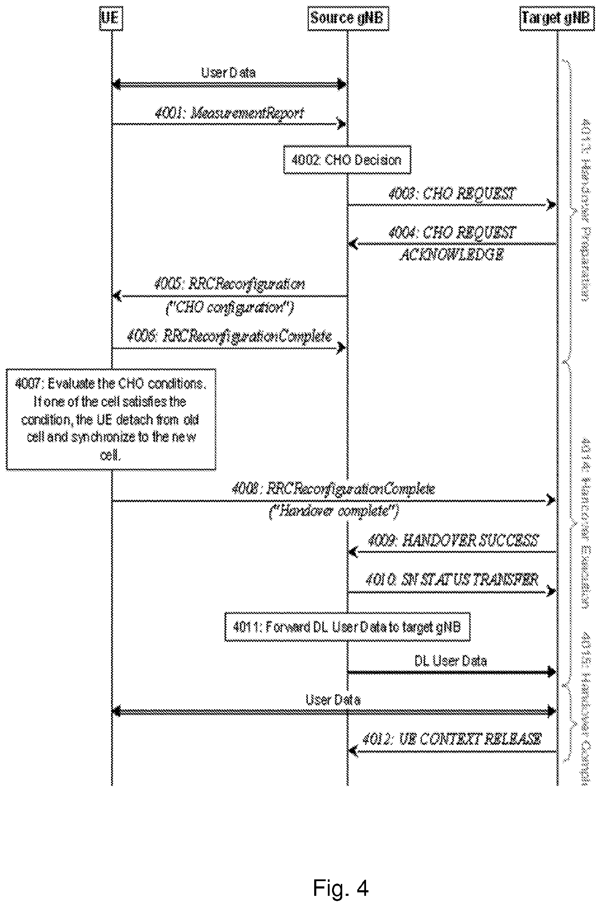

**Fig. 4** shows the signalling flow for a conditional handover.
**Actions 4001-4002.** The UE and source gNB have an established connection and is exchanging user data. Due to some trigger, e.g. a measurement report from the UE, the source gNB decides to configure one or multiple CHO candidate cells. The threshold used for the measurement reporting should be chosen lower than the one in the handover execution condition. This allows the serving cell to prepare the handover when the radio link to the UE is still stable. The execution of the handover is done at a later point in time (and threshold) which is considered optimal for the handover execution.
**Actions 4003-4004.** Same as actions 2003-2004 in the legacy handover procedure in Fig 2 except that the source node indicates that the handover is a conditional handover.
**Actions 4005-4006.** To configure a candidate target cell the source node sends the CHO configuration (i.e. a *RRCReconfiguration* message) to the UE which contains the handover command and the associated execution condition. The handover command (also an *RRCReconfiguration* message) is generated by the target node during the handover preparation phase and the execution condition is generated by the source node.
**Actions 4007-4008.** Later on, if the execution condition is met, the UE executes the handover by performing random access and sending the handover complete message (i.e. an *RRCReconfigurationComplete* message) to the target node.
**Action 4009.** The target gNB sends a HANDOVER SUCCESS message to the source gNB indicating the UE has successfully established the target connection.
**Actions 4010-4011.** Upon reception of the handover success indication, the source gNB stops scheduling any further DL or UL data to the UE and sends a SN STATUS TRANSFER message to the target gNB indicating the latest PDCP SN transmitter and receiver status. The source node now also starts to forward User Data to the target node.
**Action 4012.** Same as action 2011 in the legacy handover procedure.

To both increase handover robustness and reduce data interruption during handover it has been proposed to combine CHO and DAPS. Such combined handover procedure will be referred to in the remainder as a conditional DAPS handover. One of the reasons for this combination is that while CHO aims to improve robustness, the interruption time may be significant, especially if a late packet forwarding approach is implemented i.e. if the target node only receives packets from source node after the UE shows up in target i.e. after random access and the transmission of the *RRCReconfigurationComplete.* The alternative to late packet forwarding is early packet forwarding. With early packet forwarding, the source node may initiate forwarding of packets to the target node at any time after the handover command (i.e. *RRCReconfiguration* message) has been sent to the UE (potentially even before that) and packet forwarding will thus start before the UE connects to the target cell. If early packet forwarding is implemented, the interruption time may be reduced, but there would still be some interruption equivalent to a legacy handover.

Document QUALCOMM INCORPORATED: "LTE Mobility Robustness Enhancements for DAPS eMBB HO", 3GPP DRAFT; vol. RAN WG2, no. Prague, Czech Republic; 16 August 2019, is a 3GPP paper discussing how to improve CHO robustness with DAPS (dual active protocol stack) enhanced make before break (MBB) HO thereby proposing to implement a so-called hybrid CHO DAPS enhanced MBB HO to use the advantages of both procedures (latency and reliability), however without providing details about a concrete possible solution.

Document NEC: "Combination of CHO and DAPS", 3GPP DRAFT; R2-1915455, vol. RAN WG2, no. Reno, USA; 8 November 2019, is also a 3GPP paper focusing on the support of simultaneous connectivity (DAPS) and CHO. The source node may need to downgrade its current configuration which can be achieved before sending a HO command, or in one RRC message with the HO command.

Document ERICSSON: "Capability coordination for DAPS Handover", 3GPP DRAFT; R2-1914625, vol. RAN WG2, no. Reno, USA; 7 November 2019 is another 3GPP paper focusing on the provision of downgraded source cell configuration (remove of Scells, reduce MIMO layers, reduce max. modulation order) for DAPS handover, thereby mentioning also the advantages of using one RRC message also in view of the possible support of a combined DAPS-CHO procedure. A detailed solution is not show.

### SUMMARY

The present invention defines a method performed by a first radio network node for handling communication in a wireless communication network according to independent claim 1. Furthermore, the present invention defines a corresponding radio node according to independent claim 15, as well as a corresponding method performed by a user equipment according to independent claim 7 and a corresponding user equipment according to independent claim 16. Preferred embodiments are defined in the dependent claims.

The following aspects in the Summary section are for illustrative purpose.

An object of embodiments herein is to provide a mechanism that improves handover in the wireless communication network.

According to an aspect the object is achieved by providing a method performed by a first radio network node for handling communication in a wireless communication network. The first radio network node transmits, to a user equipment served by the first radio network node in a first cell, a message for the UE, including an indication for a reconfiguration, e.g. limited configuration, for communicating with the first radio network node in the first cell during a handover of the UE to a second cell. The message is associated with a configuration for handing over the UE to the second cell based on whether an execution condition is fulfilled or not and/or for maintaining a connection to the cell while a connection to the second cell is being established. The first radio network node further receives information from the UE indicating that the UE has applied the reconfiguration.

According to another aspect the object is achieved by providing a method performed by a UE for handling communication in a wireless communication network. The UE receives, from a first radio network node serving the UE in a first cell, a message for the UE, including an indication for a reconfiguration, e.g. limited configuration, for communicating with the first radio network node in the first cell during a handover of the UE to a second cell. The message is associated with a configuration for handing over the UE to a cell based on whether an execution condition is fulfilled or not and/or for maintaining a connection to the cell while a connection to the second cell is being established. The UE applies the reconfiguration and informs the first radio network node that the reconfiguration is applied at the UE.

It is furthermore provided herein a computer program product comprising instructions, which, when executed on at least one processor, cause the at least one processor to carry out any of the methods above, as performed by the first radio network node or the UE, respectively. It is additionally provided herein a computer-readable storage medium, having stored thereon a computer program product comprising instructions which, when executed on at least one processor, cause the at least one processor to carry out the method according to any of the methods above, as performed by the first radio network node or the UE, respectively.

According to yet another aspect the object is achieved by providing a first radio network node for handling communication in a wireless communication network. The first radio network node is configured to transmit, to a user equipment served by the first radio network node in a first cell, a message for the UE, including an indication for a reconfiguration, e.g. limited configuration, for communicating with the first radio network node in the first cell during a handover of the UE to a second cell. The message is associated with a configuration for handing over the UE to the second cell based on whether an execution condition is fulfilled or not and/or for maintaining a connection to the cell while a connection to the second cell is being established. The first radio network node is further configured to receive information from the UE indicating that the UE has applied the reconfiguration.

According to still another aspect the object is achieved by providing a UE for handling communication in a wireless communication network. The UE is configured to receive, from a first radio network node serving the UE in a first cell, a message for the UE, including an indication for a reconfiguration, e.g. limited configuration, for communicating with the first radio network node in the first cell during a handover of the UE to a second cell. The message is associated with a configuration for handing over the UE to the second cell based on whether an execution condition is fulfilled or not and/or for maintaining a connection to the cell while a connection to the second cell is being established. The UE is further configured to apply the reconfiguration and to inform the first radio network node that the reconfiguration is applied at the UE.

Embodiments herein relate to methods for reconfiguring the UE's configuration in the first cell, a.k.a. source cell, in for example a conditional DAPS handover. Common for all the embodiments is that the first radio network node i.e. the source node, is informed when the UE applies the (source cell) reconfiguration, e.g. a downgrade of the UE's current configuration, which ensures that the source cell configurations used by the UE and source node can be synchronized. Hence, embodiments herein enable the UE's current configuration for the source cell to be reconfigured, e.g. downgraded, in a conditional DAPS handover. This allows conditional DAPS handover to be used by a wider range of UEs which are not capable of using the full source cell configuration when being simultaneously connected to the source and target cell. In particular, the solution ensures that the source cell configurations used by the UE and source node can be synchronized during a conditional DAPS handover for such UEs. Thus, embodiments herein improve handover in the wireless communication network.

### BRIEF DESCRIPTION OF THE DRAWINGS

Embodiments will now be described in more detail in relation to the enclosed drawings, in which:
- Figs. 1-4: are illustrations according to prior art;
- Fig. 5A: is a schematic overview depicting a communication network according to embodiments herein;
- Fig. 5B: is a combined signalling scheme and flowchart according to embodiments herein;
- Fig. 6: is a combined signalling scheme and flowchart according to embodiments herein;
- Fig. 7: is a combined signalling scheme and flowchart according to embodiments herein;
- Fig. 8: is a combined signalling scheme and flowchart according to embodiments herein;
- Fig. 9: is a combined signalling scheme and flowchart according to embodiments herein;
- Fig. 10: is a flowchart depicting a method performed by a first radio network node according to embodiments herein;
- Fig. 11: is a flowchart depicting a method performed by a UE according to embodiments herein;
- Fig. 12: is a block diagram depicting a first radio network node according to embodiments herein;
- Fig. 13: is a block diagram depicting a UE according to embodiments herein;
- Fig. 14: schematically illustrates a telecommunication network connected via an intermediate network to a host computer;
- Fig. 15: is a generalized block diagram of a host computer communicating via a base station with a user equipment over a partially wireless connection; and
- Figs. 16-19: are flowcharts illustrating methods implemented in a communication system including a host computer, a base station and a user equipment.

### DETAILED DESCRIPTION

Embodiments herein relate to conditional make-before-break handover in a wireless communication system. Embodiments herein are described in the context of 5G/NR but the same concept can also be applied to other wireless communication system such as 4G/LTE. Embodiments herein may be described within the context of 3GPP NR radio technology (3GPP TS 38.300 V15.2.0 (2018-06)), e.g. using gNB as the radio network node. It is understood, that the problems and solutions described herein are equally applicable to wireless access networks and user-equipments (UEs) implementing other access technologies and standards. NR is used as an example technology where embodiments are suitable, and using NR in the description therefore is particularly useful for understanding the problem and solutions solving the problem. In particular, embodiments are applicable also to 3GPP LTE, or 3GPP LTE and NR integration, also denoted as non-standalone NR.

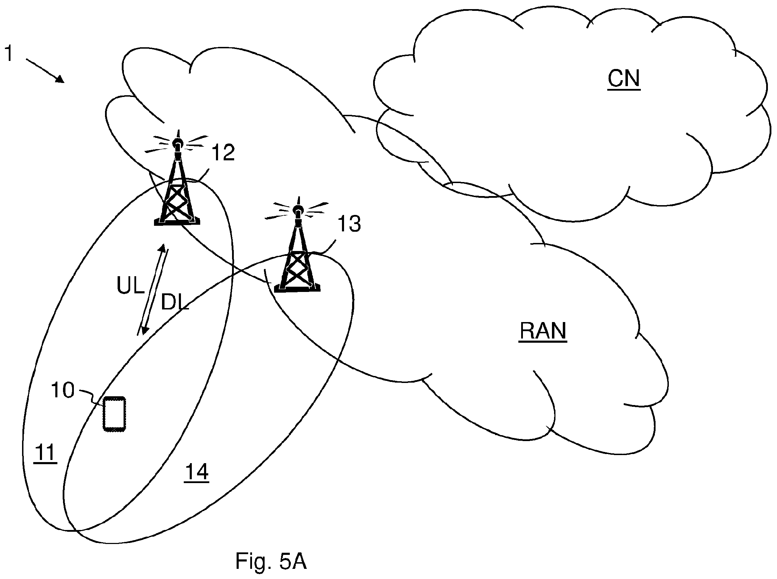

Embodiments herein relate to wireless communication networks in general. **Fig. 5A** is a schematic overview depicting **a wireless communication network 1.** The wireless communication network 1 comprises e.g. one or more RANs and one or more CNs. The wireless communication network 1 may use one or a number of different technologies, such as Wi-Fi, Long Term Evolution (LTE), LTE-Advanced, NR, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in 5G systems, however, embodiments are also applicable in further development of the existing communication systems such as e.g. a WCDMA or a LTE system.

In the wireless communication network 1, wireless devices e.g. **a UE 10** such as a mobile station, a non-access point (non-AP) station (STA), a STA, a user equipment and/or a wireless terminal, communicate via one or more Access Networks (AN), e.g. RAN, to one or more core networks (CN). It should be understood by the skilled in the art that "UE" is a non-limiting term which means any terminal, wireless communication terminal, user equipment, Machine Type Communication (MTC) device, Device to Device (D2D) terminal, internet of things (IoT) operable device, or node e.g. smart phone, laptop, mobile phone, sensor, relay, mobile tablets or even a small base station capable of communicating using radio communication with a network node within an area served by the network node.

The communication network 1 comprises **a first radio network node 12** providing e.g. radio coverage over a geographical area, **a first service area 11** i.e. a first cell, of a radio access technology (RAT), such as NR, LTE, Wi-Fi, WiMAX or similar. The first radio network node 12 may be a transmission and reception point, a computational server, a base station e.g. a network node such as a satellite, a Wireless Local Area Network (WLAN) access point or an Access Point Station (AP STA), an access node, an access controller, a radio base station such as a NodeB, an evolved Node B (eNB, eNodeB), a gNodeB (gNB), a base transceiver station, a baseband unit, an Access Point Base Station, a base station router, a transmission arrangement of a radio base station, a stand-alone access point or any other network unit or node depending e.g. on the radio access technology and terminology used. The first radio network node 12 may alternatively or additionally be a controller node or a packet processing node or similar. The first radio network node 12 may be referred to as source node, source access node or a serving network node wherein the first service area 11 may be referred to as a serving cell, source cell or primary cell, and the first radio network node communicates with the UE 10 in form of DL transmissions to the UE 10 and UL transmissions from the UE 10. The first radio network node may be a distributed node comprising a baseband unit and one or more remote radio units.

The communication network 1 comprises **a second radio network node 13** providing e.g. radio coverage over a geographical area, **a second service area 14** i.e. a second cell, of a radio access technology (RAT), such as NR, LTE, Wi-Fi, WiMAX or similar. The second radio network node 13 may be a transmission and reception point, a computational server, a base station e.g. a network node such as a satellite, a Wireless Local Area Network (WLAN) access point or an Access Point Station (AP STA), an access node, an access controller, a radio base station such as a NodeB, an evolved Node B (eNB, eNodeB), a gNodeB (gNB), a base transceiver station, a baseband unit, an Access Point Base Station, a base station router, a transmission arrangement of a radio base station, a stand-alone access point or any other network unit or node depending e.g. on the radio access technology and terminology used. The second radio network node 13 may alternatively or additionally be a controller node or a packet processing node or similar. The second radio network node 13 may be referred to as a target node, a candidate target node, a target access node or a target network node wherein the second service area 14 may be referred to as a target cell or secondary cell, and the second radio network node 13 communicates with the UE 10 in form of DL transmissions to the UE 10 and UL transmissions from the UE 10. The second radio network node may be a distributed node comprising a baseband unit and one or more remote radio units.

It should be noted that a service area may be denoted as cell, beam, beam group or similar to define an area of radio coverage. It should further be noted that the first and second cell may be provided by the same first radio network node 12.

Referring back to the introduction the configuration of the UE in the first cell 11 may need to be "downgraded" prior to executing a DAPS handover in order to not exceed the UE capabilities when the UE 10 is simultaneously connected to both the source and target cell during the DAPS handover. Examples of configurations that may need to be downgraded in the source cell include reduction of the UL/DL bandwidth, reduction of the maximum number of DL/UL MIMO layers, or reduction of the number of configured Secondary Cells (SCells) used in carrier aggregation. For the conditional DAPS handover it is currently unclear how such downgrading can be performed.

Embodiments herein disclose that the first radio network node 12 transmits to the UE 10 a message for the UE 10, including an indication for a reconfiguration for communicating with the first radio network node 12 in the first cell 11 during a handover of the UE 10 to the second cell 14. The message is associated with a configuration for handing over the UE 10 to the second cell 14 based on whether an execution condition is fulfilled or not, and/or for maintaining a connection to the first cell 11 while a connection to the second cell 14 is being established. The first radio network node 12 receives information, from the UE 10, indicating that the UE 10 has applied the reconfiguration.

Although the solution is mainly described herein using NR terminology, it is equally applicable to LTE, where, for instance,
*RRCConnectionReconfiguration*/*RRCConnectionReconfigurationComplete* messages in LTE correspond to, or are equivalent to
*RRCReconfiguration*/*RRCReconfigurationComplete* in NR.

In the context of the method the "conditional handover configuration(s)" comprises at least the following:
- An *RRCReconfiguration*-like message or an *RRCReconfiguration* message (or any message with equivalent content), possibly containing a *reconfigurationWithSync* information element (IE) using NR terminology (defined in 38.331 specifications) and prepared by target candidates. Or, using the E-UTRA terminology, an *RRCConnectionReconfiguration*-like message or an *RRCConnectionReconfiguration* message with *mobilityControlInfo* IE (defined in 36.331 specifications);
- Triggering condition(s) configuration e.g. something like A1-A6 triggering events or B1-B2 inter-RAT triggering events (as defined in 38.331 / 36.331 in reportConfig), where instead of triggering a measurement report it would trigger a conditional handover or other conditional mobility procedure;
- Other conditional handover controlling parameters e.g. a timer defining the validity of candidate target resources, etc.

A UE configured with a set of conditional *RRCReconfiguration*(s), may execute a handover (or conditional handover, depending how the procedure is going to be called in the final NR RRC specifications) when the condition for the handover is fulfilled.

More details on the CHO configuration can be found the latest version of the running RRC CR for DAPS handover, see for example R2-1914834.

The term Conditional Handover is used as an example, but the method is applicable for conditional mobility procedures such as Conditional PSCell Addition / Change (CPAC). In that case a source RAN node can be a Master Node or a Secondary Node, while a candidate target RAN node can be a target Secondary Node.

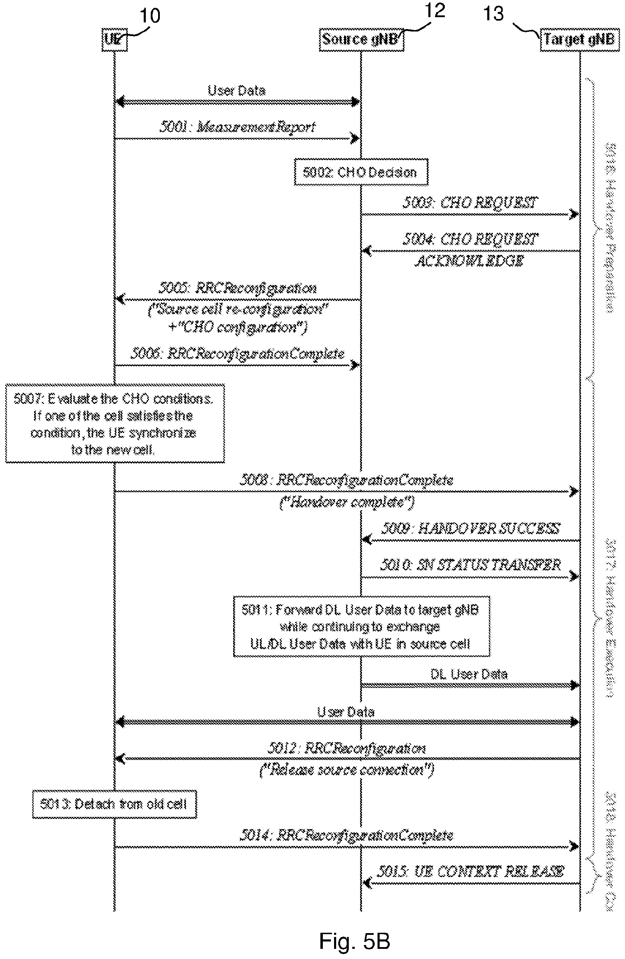

**Fig. 5B** illustrates an embodiment disclosed herein and the radio network nodes are exemplified as gNBs. In this first embodiment the reconfiguration also denoted as source cell reconfiguration (e.g. downgraded) is sent together with the CHO configuration (i.e. in the same *RRCReconfiguration* message containing the CHO configuration(s)) and is applied by the UE 10 before the CHO configuration. Note that the CHO condition may be fulfilled already upon reception of the CHO configuration, and then the UE 10 have received the reconfiguration so that it can be applied before the CHO is executed. Hence, the source cell reconfiguration may be included in the same message as the CHO configuration, or transmitted to the UE prior to the CHO configuration.

In all embodiments of the present invention, the message acknowledging the reception of the CHO configuration, i.e. the *RRCReconfigurationComplete* message, also serves as an acknowledgement that the UE has applied the downgraded source cell configuration. Hence, with this embodiment, the UE applies the source cell reconfiguration (e.g. a downgraded source cell configuration) as soon as it receives the *RRCReconfiguration* message that includes the source cell reconfiguration and the CHO configuration(s). By sending the source cell reconfiguration, e.g. a downgraded configuration such as a configuration with a limited or reduced bandwidth or number of radio link control entities, cells or similar, and CHO configuration in the same message, two messages are saved over the radio interface compared to when downgrading of the source cell configuration is performed using a separate RRC reconfiguration procedure.

The downgraded configuration, or reconfiguration in more general terms, is in this case part of the source cell configuration that is within the *RRCReconfiguration* message, that itself comprises the CHO configuration(s) per candidate target cell in an AddMod type of list, e.g. called *CHO-ConfigToAddModList.* Furthermore, within each element in the AddMod list for CHO configurations, i.e. within each CHO configuration, there is an equivalent to a DAPS HO command, which is prepared by the candidate target node controlling the candidate target cell to which the CHO configuration pertains, wherein the equivalent to a DAPS HO command constitutes an *RRCReconfiguration* including a *reconfigurationWithSync* IE.

**Actions 5001-5002.** The UE 10 and source gNB 12 have an established connection and is exchanging user data. Due to some trigger, e.g. a measurement report from the UE 10, the source gNB 12 decides to configure one or multiple CHO candidate cells. The threshold used for the measurement reporting should be chosen lower than the one in the handover execution condition. This allows the serving cell to prepare the handover when the radio link to the UE 10 is still stable. The execution of the handover is done at a later point in time (and threshold) which is considered optimal for the handover execution.

**Actions 5003.** The source gNB 12 sends a HANDOVER REQUEST to the target gNB 13 with necessary information to prepare the handover at the target side. The information includes among other things the UE source configuration, the UE capabilities and an indication that the handover is a combined conditional DAPS handover. In one example, the indication that the handover is a combined conditional DAPS handover is separated into one indication of conditional handover and one indication of DAPS handover (the latter one may be indicated per data radio bearer). The UE source configuration indicated in the handover request is a reconfigured ("downgraded") source configuration the UE 10 would use during the combined conditional and DAPS handover execution, in order to not exceed the UE capabilities during DAPS HO execution.

**Action 5004.** The target gNB 13 prepares the handover and responds with a HANDOVER REQUEST ACKNOWLEDGE to the source gNB 12, which includes the handover command (a *RRCReconfiguration* message) to be sent to the UE 10. The handover command includes information needed by the UE 10 to access the target cell, e.g., random access configuration, a new C-RNTI assigned by the target access node 13 and security parameters enabling the UE 10 to calculate the target security key so the UE 10 can send the handover complete message (a *RRCReconfigurationComplete* message). The handover command also includes an indication of DAPS handover (this may be indicated per data radio bearer).

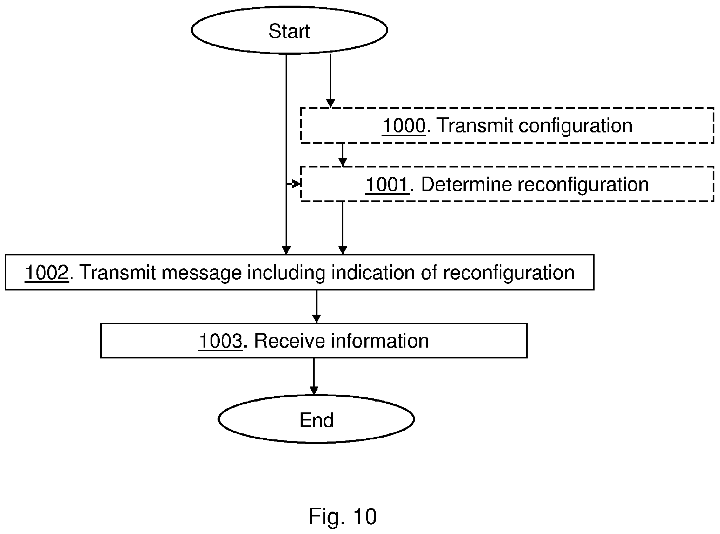

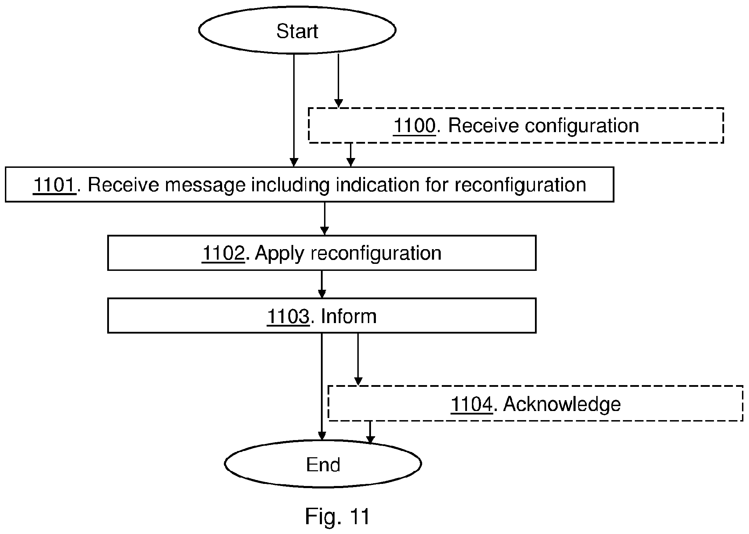

**Actions 5005-5006.** To configure a candidate target cell the source gNB 12 sends a *RRCReconfiguration* message to the UE 10 which contains the handover command and the associated execution condition. The handover command (also an *RRCReconfiguration* message) is generated by the target gNB 13 and during the handover preparation phase and the execution condition is generated by the source gNB 12. In the same *RRCReconfiguration* message also a source cell reconfiguration is included in order to not exceed the UE capabilities when the UE is simultaneously connected to the source and target cells. After the UE 10 has applied the new configuration it responds with a *RRCReconfigurationComplete* message to the source gNB 12. In one example, the source gNB 12 divides the candidate target cell configuration into multiple messages and the source cell reconfiguration may only be sent in one of these messages (typically the first one). In another example, the source gNB 12 divides the candidate target cell configuration into multiple messages and the source cell reconfiguration is included in each message in order to downgrade into a source configuration which will not exceed the UE capabilities for any of the configured candidate target cells up to and including the candidate target cell(s) included in the same message. This corresponds to actions 1002 and 1003 in Fig. 10 and 1101-1103 in Fig. 11.

**Action 5007-5008.** The UE 10 monitors the CHO execution condition for all configured target cells. Later on, if the execution condition is satisfied, the UE 10 executes the DAPS handover as included in the HO command to the target cell associated with the execution condition that was satisfied.

The UE 10 starts synchronizing to the target cell. Since this is a DAPS handover, the UE 10 keeps the connection in the source cell and continues to exchange UL/DL data with the source gNB 12 even after it has received the handover command. In order to decrypt/encrypt DL/UL data, the UE 10 needs to maintain both the source and target security key until the source cell is released. The UE 10 can differentiate the security key to be used based on the cell which the DL/UL packet is received/transmitted on. If header compression is used the UE 10 also needs to maintain two separate RObust Header Compression (ROHC) contexts for the source and target cell.

Once the UE 10 has completed the random access to the target cell 14, the UE 10 sends the handover complete (a *RRCReconfigurationComplete* message) to the target gNB 13. After this point the UE 10 receives DL data from both source and target cell while UL data transmission is switched to the target cell.

**Action 5009.** The target gNB 13 sends a HANDOVER SUCCESS message to the source gNB 12 indicating the UE 10 has successfully established the target connection.

**Actions 5010-5011.** Upon reception of the handover success indication, the source gNB 12 sends a SN STATUS TRANSFER message to the target gNB 13 indicating the latest packet data convergence protocol (PDCP) sequences number (SN) transmitter and receiver status. The source node 12 now also starts to forward User Data to the target node 13. Note that data that is forwarded may also be sent to the UE 10 in the source cell 11, i.e. DL data may be duplicated.

**Actions 5012-5014.** The target gNB 13 indicates to the UE 10 to release the source connection by sending an *RRCReconfiguration* message. The UE 10 releases the source connection ("detach from old cell") and responds with a *RRCReconfigurationComplete* message. From this point on, DL and UL data is only received and transmitted in the target cell 14. In one example, the target gNB 13 includes also a target cell reconfiguration in the *RRCReconfiguration* message in order to "upgrade" the UE configuration after the DAPS handover execution has completed as the UE is no longer simultaneously connected to the source and target cells.

**Action 5015.** The target gNB 13 requests the core network node such as an AMF to switch the DL data path from the UPF from the source gNB 12 to the target gNB 13 (not shown). Once the path switch is completed the target gNB 13 sends the UE CONTEXT RELEASE to the source gNB 12.

Note that Fig. 5B shows conditional DAPS handover with "late" data forwarding, i.e. the source starts to forward User Plane packets to the target node 13 when the UE 10 has established the connection to the target cell and the source node 12 has received the HANDOVER SUCCESS indication. Another possibility is to apply "early" data forwarding, i.e. the source node 12 starts to forward User Plane packets directly after sending the CHO configuration to the UE 10 (after action 5005).

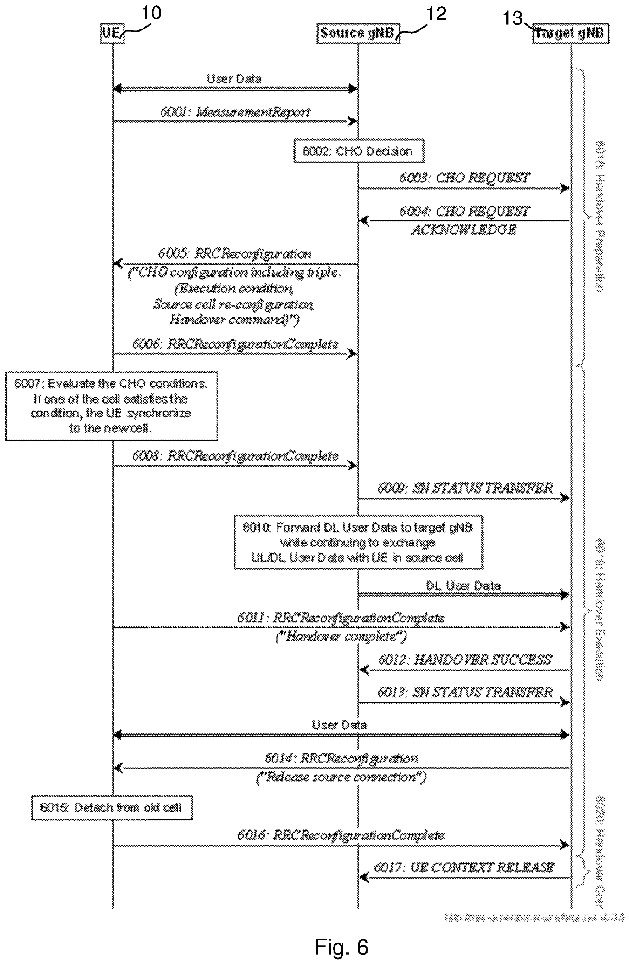

**Fig. 6** illustrates an additional or alternative embodiment, embodiment 2.

In this second embodiment the reconfiguration according to embodiments herein, also referred to as the downgraded source cell configuration or more generally: source cell reconfiguration, is associated with the CHO configuration. The source cell reconfiguration may be included in the CHO configuration, and is associated with, for example, comprised, the same execution condition as the DAPS handover command. That is, instead of the CHO configuration including the pair:
(Execution condition, Handover command)
   the CHO configuration may include the triple:
(Execution condition, Source cell reconfiguration, Handover command)

An alternative modeling is that the CHO configuration still (as in legacy) includes the execution condition-handover command pair and is further associated with the source cell reconfiguration. With this approach, since the source cell reconfiguration is associated with the same execution condition as the CHO, it may be referred to as a conditional source cell reconfiguration.

The association of the source cell reconfiguration and the DAPS handover command with the same execution condition will cause the downgraded source cell configuration and the DAPS handover command to be applied or executed essentially at the same time, since they are triggered by the same condition fulfillment. To ensure that the UE's capabilities are not exceeded, the UE 10 in practice applies the received source cell reconfiguration before it accesses the target cell, i.e. the candidate target cell for which the CHO execution condition has been fulfilled. It is also possible that the UE 10 applies the received source cell reconfiguration and initiates access to the source cell in parallel. If needed, a priority rule could be specified to ensure that the source cell reconfiguration is applied before the handover command is executed. In one example, the priority is signalled explicitly (for example, as an information field) for the source cell reconfiguration and for the Handover command. In another example, the priority is implicit, based on the relative order of where the source cell reconfiguration and for the Handover command are included in the CHO configuration. For example, the UE 10 executes them in the order they are listed in the CHO configuration.

The handover command and the source cell reconfiguration may be separate *RRCReconfiguration* messages (optionally both of them includes the same execution condition) which hence will be acknowledged by the UE 10 using two separate *RRCReconfigurationComplete* messages. By requiring the UE 10 to apply the source cell reconfiguration before executing the handover command, the *RRCReconfigurationComplete* corresponding to the source cell reconfiguration will be sent in the source cell while the *RRCReconfigurationComplete* corresponding to the handover command will be sent in the target cell. In this way the source node 12 is notified when the UE 10 has applied the new source cell reconfiguration and can change the configuration on its side as well. Another way to ensure that the *RRCReconfigurationComplete* message acknowledging the source cell reconfiguration is transmitted/included before the UE CHO execution is to ensure that the *RRCReconfiguration* message containing the source cell reconfiguration is transmitted before the *RRCReconfiguration* message constituting the (conditional) HO command and requiring that the same order is maintained for the corresponding *RRCReconfigurationComplete* messages.

The *RRCReconfiguration* message containing the (conditional) source cell reconfiguration may be prepared by the candidate target node 13 and sent to the source node 12 together with the HO command in the Handover Request Acknowledgement message, or it may be prepared by the source node 12. In either case, the candidate target node 13 may need to be aware of the source cell reconfiguration, since this is the configuration the UE 12 will have when/if it executes the CHO and accesses/connects to the candidate target node 13 in the concerned candidate target cell. Hence, the source cell reconfiguration (or the resulting UE configuration after applying the source cell reconfiguration) may be transferred from the source node 12 to the candidate target node 13 in the Handover Request message.

With the assumed modeling of CHO configuration transfer, using an AddMod type of list containing one or more CHO configuration(s), each pertaining to a certain candidate target cell, there may be multiple *RRCReconfiguration* message pairs, i.e. multiple pairs of an *RRCReconfiguration* message with a source cell reconfiguration and an *RRCReconfiguration* message constituting a HO command, all of which being included in a an overall/umbrella *RRCReconfiguration* message compiled by the source node. Furthermore, potentially, the different *RRCReconfiguration* messages containing source cell reconfigurations, each associated with or included in a different CHO configuration, may be different from each other. Hence, when the UE 10 transmits an *RRCReconfigurationComplete* message to acknowledge an *RRCReconfiguration* message containing the source cell reconfiguration, the source node 12 is informed of which source cell reconfiguration, i.e. which *RRCReconfiguration* message with a source cell reconfiguration, that has been triggered. One way to do this is to have an identifier in the *RRCReconfiguration* message, e.g. a transaction ID, which is echoed in the *RRCReconfiguration* complete. However, if the candidate target node 13 prepares the *RRCReconfiguration* message containing the source cell reconfiguration, different candidate target nodes may include the same identifier/transaction ID in the *RRCReconfiguration* message, thereby making it non-unique/ambiguous. To avoid this, the source node 12 may assign and include an identifier/transaction ID together with the source cell reconfiguration in the Handover Request message to the candidate target node 13 or the source node 12 may insert the identifier/transaction ID in the *RRCReconfiguration* message when it has received it from the candidate target node in the Handover Request Acknowledge message before forwarding/transmitting the *RRCReconfiguration* message to the UE 10. Alternatively, when the UE 10 transmits the *RRCReconfigurationComplete* message to acknowledge the *RRCReconfiguration* message containing the source cell reconfiguration, the UE 10 may include an indication of which of the source cell reconfigurations it applies, i.e. which *RRCReconfiguration* message it responds to. Such an indication could e.g. have the form of CHO configuration ID, which will anyway be part of each CHO configuration in a CHO configuration AddMod list, e.g. denoted *cho-ConfigId* or *CHO-ConfigId,* or the identity, e.g. physical cell ID (PCI), of the concerned candidate target cell, i.e. the candidate target cell for which the execution condition has been fulfilled.

The *RRCReconfiguration*/*RRCReconfigurationComplete* messages are currently transmitted on SRB1. Hence, if the downgrading of the source cell configuration also changes parameters that affect SRB1 transmission, the source node 12 may not be able to receive the *RRCReconfigurationComplete* message, if the source cell reconfiguration has been applied. There may also be other configuration changes, apart from parameters affecting SRB1, in the downgrading, which may lead to that the source node 12 may not be able to understand the *RRCReconfigurationComplete* message sent using the new configuration. To address this issue the source node 12 may need apply both the full and downgraded source cell configuration in parallel until the reconfiguration is executed and be prepared to receive on SRB1 using either configuration. The source node 12 can detect when the UE 10 applies the source cell reconfiguration e.g. by detecting when the UE 10 starts using a given C-RNTI provided in the source cell reconfiguration. Alternatively, the rule governing the UE's behavior could be that the old source cell configuration should be used for transmission of the *RRCReconfigurationComplete* message and the source cell reconfiguration should be applied after this transmission. For example, when the UE 10 obtains an indication that *RRCReconfigurationComplete* message has been successfully transmitted to the source gNB 12, as e.g. a hybrid access repeat request acknowledgement (HARQ ACK) or an radio link control acknowledgement (RLC ACK), the source node 12 may apply the source cell reconfiguration. Another alternative is that the UE 10 sends some other form of indication before it applies the source cell reconfiguration, e.g. another RRC message, a MAC Control Element (MAC CE), or a layer 1 indication.

Another alternative is to associate yet another *RRCReconfiguration* message with the execution condition, i.e. the CHO configuration triplet will become a quadruplet, which will be acknowledged by its own *RRCReconfigurationComplete* message in the source cell 11. This *RRCReconfiguration* message could be empty and by executing this message first, its corresponding *RRCReconfigurationComplete* message is sent on SRB1 using the full configuration. The source node 12 would then know that the UE 10 will soon apply the source cell reconfiguration. The CHO configuration would thus contain three *RRCReconfiguration* messages associated with the same execution condition: a first message, which may be empty, to trigger a later first acknowledgement message from the UE 10 to give the network a "warning" that the UE 10 is about to apply the source cell reconfiguration; a second message to reconfigure/downgrade the UE's source cell configuration and a third one to provide the UE with the DAPS handover command. When the CHO trigger/execution condition is fulfilled, the UE 10 sends three acknowledgement messages, i.e. *RRCReconfigurationComplete* messages, the first two are sent to the source node 12 and the third one is sent to the target node 13.

**Actions 6001-6004.** Same as actions 5001-5004 in the first embodiment illustrated in Fig. 5B.

**Actions 6005-6006.** To configure the candidate target cell 14, the source gNB 12 sends a *RRCReconfiguration* message to the UE 10 which may contain a triplet consisting of execution condition, the source cell reconfiguration, and handover command. The handover command (also an *RRCReconfiguration* message) may be generated by the target gNB 13 during the handover preparation phase and the execution condition as well as the source cell reconfiguration may both be generated by the source gNB 12. The source cell reconfiguration is included in order to not exceed the UE capabilities when the UE 10 is simultaneously connected to the source and target cells. The UE 10 acknowledges the reception of the reconfiguration by responding with a *RRCReconfigurationComplete* message to the source gNB 12. This corresponds to action 1002 in Fig. 10 and 1101 in Fig. 11.

**Actions 6007-6008.** The UE 10 monitors the CHO execution condition for all configured target cells. Later on, if the execution condition is satisfied, the UE 10 first executes the source cell reconfiguration associated with the execution condition (as part of the same triple) that was satisfied. After the UE 10 has applied the source cell reconfiguration the UE 10 may respond with a *RRCReconfigurationComplete* message to the source gNB 12. This corresponds to action 1003 in Fig. 10 and 1103 in Fig. 11.

**Actions 6009-6010.** When the source gNB 12 received the *RRCReconfigurationComplete* message in action 6008 it knows that the UE 10 has applied the source cell reconfiguration and that the DAPS HO execution is started. The source gNB 12 now sends a SN STATUS TRANSFER message to the target gNB 13 indicating the latest PDCP SN transmitter and receiver status. The source node 12 also starts to forward User Data to the target node 13. Note that data that is forwarded may also be sent to the UE 10 in the source cell 11, i.e. DL data may be duplicated.

**Action 6011.** After having applied the reconfiguration in actions 6007-6008, the UE 10 executes the DAPS handover as included in the HO command to the target cell 14 associated with the execution condition (as part of the same triple) that was satisfied in action 6007.

The UE 10 may start synchronizing to the target cell 14. Since this is a DAPS handover, the UE 10 keeps the connection in the source cell 11 and continues to exchange UL/DL data with the source gNB 12 even after it has received the handover command. In order to decrypt/encrypt DL/UL data, the UE 10 may maintain both the source and target security key until the source cell 11 is released. The UE 12 can differentiate the security key to be used based on the cell which the DL/UL packet is received/transmitted on. If header compression is used the UE 10 may also maintain two separate RObust Header Compression (ROHC) contexts for the source and target cell, respectively.

Once the UE 10 has completed the random access to the target cell 14, the UE 10 sends the handover complete, a *RRCReconfigurationComplete* message, to the target gNB 13. After this point the UE 10 receives DL data from both the source and the target cells while UL data transmission is switched to the target cell 14.

**Action 6012.** The target gNB 13 sends a HANDOVER SUCCESS message to the source gNB 12 indicating that the UE 10 has successfully established the target connection.

**Action 6013.** Upon reception of the handover success indication, the source gNB 12 sends a SN STATUS TRANSFER message to the target gNB 13 indicating the latest PDCP SN transmitter and receiver status.

**Actions 6014-6017.** The same as actions 5012-5015 in the first embodiment illustrated in Fig. 5B.

Note that the same comment regarding "late" versus "early" data forwarding as made in relation to the signalling flow in the first embodiment applies also to the signalling flow in this embodiment.

The ASN.1 updates in 38.331 chapter 6.3.2 v. 15.7.0 may look like the following:
- *CHO-ConfigToAddModList*

The IE *CHO-ConfigToAddModList* concerns a list of CHO configurations to add or modify, with for each entry the *cho-ConfigId* and the associated *cho-CandidateCellConfig.*

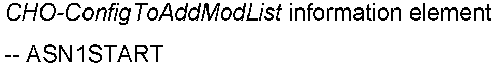

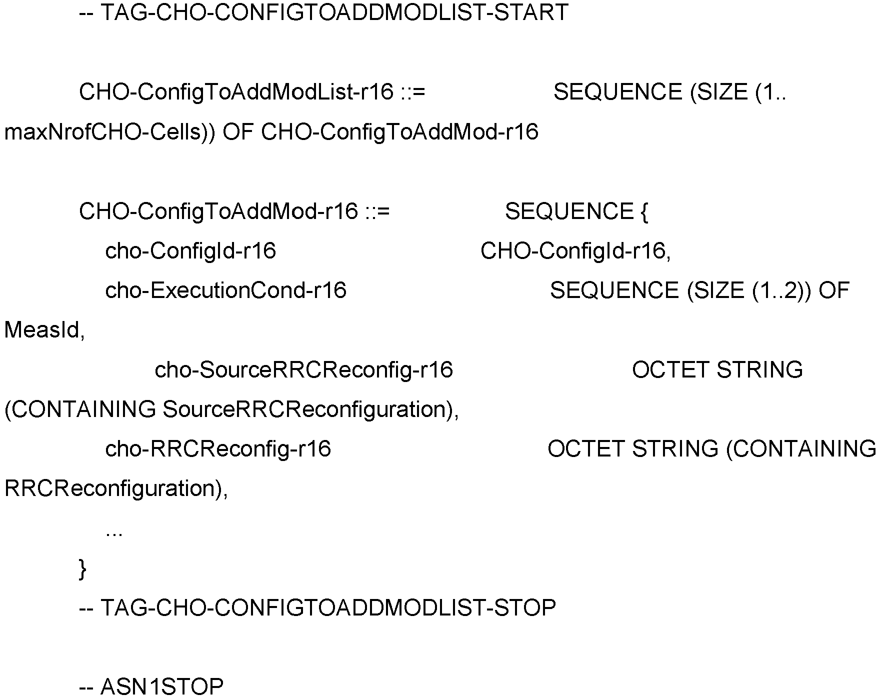

Handover command included in outer RRCReconfiguration message containing the source cell reconfiguration.

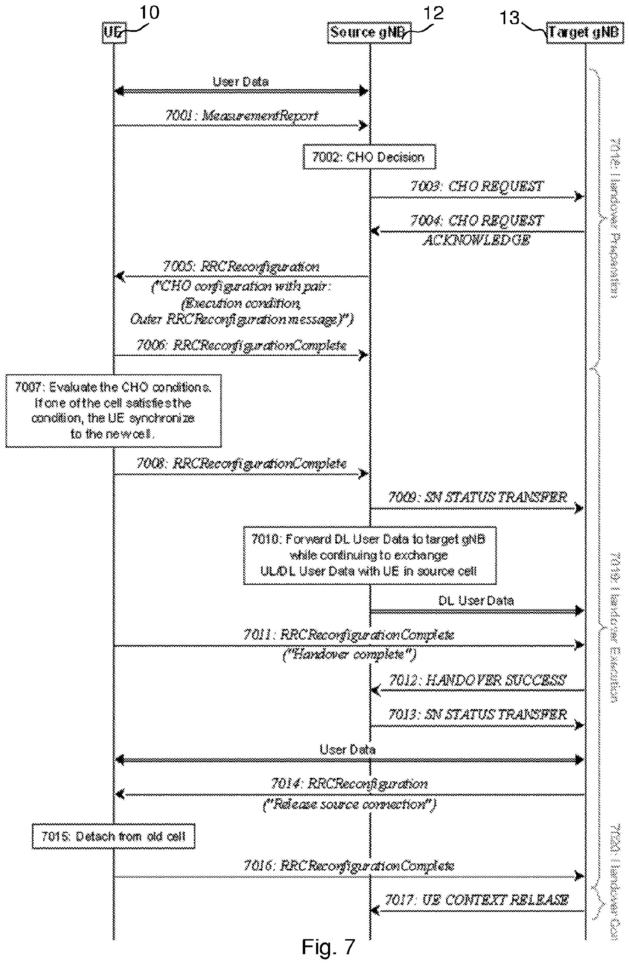

**Fig. 7** illustrates another embodiment, embodiment 3. In this third embodiment the *RRCReconfiguration* message containing the handover command is included inside the *RRCReconfiguration* message containing the source cell reconfiguration thus the RRCconfiguration message may comprise the source cell reconfiguration and the handover command. There is one such nested *RRCReconfiguration* message pair for each candidate target cell and thus for each CHO configuration in the AddMod list of CHO configurations. The outer *RRCReconfiguration* message, i.e. message with e.g. the source cell reconfiguration, is processed first before the inner *RRCReconfiguration* message, i.e. the handover command, is processed. The *RRCReconfigurationComplete* message for the outer *RRCReconfiguration* message will therefore be sent in the source cell 11 before the handover is executed.

The outer *RRCReconfiguration* message is in turn included in the CHO configuration and associated with an execution condition. That is, the CHO configuration will include the pair:

### Execution condition, Outer RRCReconfiguration message

The problem that the network doesn't know when the UE 10 switches to the source cell reconfiguration exists also in this option. The same solutions as in the embodiment 2 for source cell reconfiguration associated with execution condition can be used also here. That is, the source node 12 may need to apply both the full source cell configuration and the source cell reconfiguration in parallel, e.g. blind decoding, until the handover is executed and be prepared to receive on SRB1 using either configuration.

Another alternative, just like for embodiment 2, is to associate yet another *RRCReconfiguration* message with the execution condition, i.e. the CHO pair above will become a triplet, which will be acknowledged by its own *RRCReconfigurationComplete* in the source cell 11. This *RRCReconfiguration* message could be empty and by executing this message first *RRCReconfigurationComplete* is sent on SRB1 using the full configuration. The source node 12 would then know that the UE 10 will soon apply the source cell reconfiguration.

Another alternative is to send the *RRCReconfigurationComplete* using the old source configuration and to apply the source cell reconfiguration after the transmission of the *RRCReconfigurationComplete* message. The network will use this as an indication that the UE 10 now switches to the new configuration, i.e. to the source cell reconfiguration, and the network then also performs the switch to the new configuration. The indication that the UE 10 switches to the new configuration can also be some other type of indication, e.g. another RRC message, a MAC Control Element (MAC CE) or a layer 1 indication.

The HO command may be prepared by the candidate target node 13, but for the outer *RRCReconfiguration* message there are two options. As one option, the candidate target node 13 can prepare the outer *RRCReconfiguration* message too, after having received the reconfiguration in the Handover Request message from the source node 12. As another option, the source node 12 can prepare the outer *RRCReconfiguration* message. When receiving the HO command, e.g. a DAPS HO command, from the candidate target node 13 in the Handover Request Acknowledgement message, the source node 12 may prepare an outer *RRCReconfiguration* message and places the source cell reconfiguration and the (DAPS) HO command in the message and transmits it to the UE 10.

An alternative variant of this embodiment could be to swap the two *RRCReconfiguration* messages, so that the *RRCReconfiguration* message constituting the (DAPS) handover command includes the *RRCReconfiguration* message containing the source cell reconfiguration. That is, the *RRCReconfiguration* message constituting the (DAPS) handover command would be the outer RRC message and the *RRCReconfiguration* message containing the source cell reconfiguration would be the inner RRC message, contained within the outer RRC message. With this variant of the embodiment, the order of processing/execution of the RRC messages would be swapped, such that the UE 10 would process/execute the inner RRC message first, before processing/executing the outer RRC message, so that the UE 10 acknowledges the inner message, by transmitting an *RRCReconfigurationComplete* message or possibly some other type of acknowledgement indication, and applies the source cell reconfiguration before executing the CHO by initiating access to the target cell, i.e. the candidate target cell for which the execution condition has been fulfilled. With this alternative, the candidate target node 13 can receive the source cell reconfiguration in the Handover Request message from the source node 12 and then prepare an inner message with the source cell reconfiguration content and place it in the (DAPS) HO command *RRCReconfiguration* message. If the source cell reconfiguration is transferred to the candidate target node 13 in the form of an *RRCReconfiguration* message in an RRC container, the candidate target node 13 can simply take this *RRCReconfiguration* message as it is and place it in the outer *RRCReconfiguration* message together with the (DAPS) HO command content. Yet another message preparation alternative with this embodiment variant is that the candidate only prepares an *RRCReconfiguration* message containing the (DAPS) HO command content (i.e. a (DAPS) HO command) and sends it to the source node 12 in the Handover Request Acknowledgement message in the regular manner and the source node prepares the *RRCReconfiguration* message with the source cell reconfiguration and includes it as an inner message in the *RRCReconfiguration* message received from the candidate target node and then transmits the nested messages (i.e. outer message containing the inner message) to the UE 10. As yet another variant of the embodiment, the source cell reconfiguration and the (DAPS) HO command content are placed in a single message, without any inner and outer part. Essentially, this may be seen as the source cell reconfiguration being included in the (DAPS) HO command. With this variant, the candidate target node 13 can prepare the single *RRCReconfiguration* message containing both the source cell reconfiguration and the (DAPS) HO command content, or the candidate target node 13 only prepares an *RRCReconfiguration* message containing the (DAPS) HO command content and the source node inserts the source node reconfiguration into this message before transmitting it to the UE 10.

Note that the approach described above of sending the source cell reconfiguration and the DAPS handover command in the same RRCReconfiguration message and letting the UE 10 inform the source node 12 when it applies the source cell reconfiguration can also be useful for the regular (i.e. the non-combined) DAPS handover.
Fig. 7 illustrates a conditional DAPS handover according to embodiments herein.

**Actions 7001-7004.** Same as steps 5001-5004 in the first embodiment illustrated in figure 5.

**Actions 7005-7006.** To configure a candidate target cell 14 the source gNB 12 sends a *RRCReconfiguration* message to the UE 10 which contains an "outer *RRCReconfiguration* message" and an associated execution condition. In one alternative, the outer *RRCReconfiguration* message contains a source cell reconfiguration generated by the source gNB and within this outer *RRCReconfiguration* message, yet another *RRCReconfiguration* message which is the handover command generated by the target gNB. In another alternative, the outer *RRCReconfiguration* message is the handover command generated by the target gNB plus within this outer *RRCReconfiguration* message, a yet another *RRCReconfiguration* message, which contains a source cell reconfiguration, generated by the source gNB 12. In both alternatives, the source cell reconfiguration is included in order to not exceed the UE capabilities when the UE 10 is simultaneously connected to the source and target cells. The UE acknowledges the reception of the candidate target cell configuration by responding with a RRCReconfigurationComplete message to the source gNB 12. This corresponds to action 1002 in Fig. 10 and 1101 in Fig. 11.

**Actions 7007-7017.** Same as steps 6007-6017 in the first embodiment illustrated in figure 6.

Again, note that the same comment regarding "late" versus "early" data forwarding as made in relation to the signalling flow in the first embodiment applies also to the signalling flow in this embodiment.

In this option the ASN.1 updates in 38.331 chapter 6.3.2 may look like existing updates for conditional handover:
- *CHO-ConfigToAddModList*

The IE *CHO-ConfigToAddModList* concerns a list of CHO configurations to add or modify, with for each entry the *cho-ConfigId* and the associated *cho-CandidateCellConfig.*

### CHO-ConfigToAddModList information element

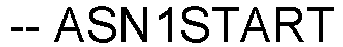

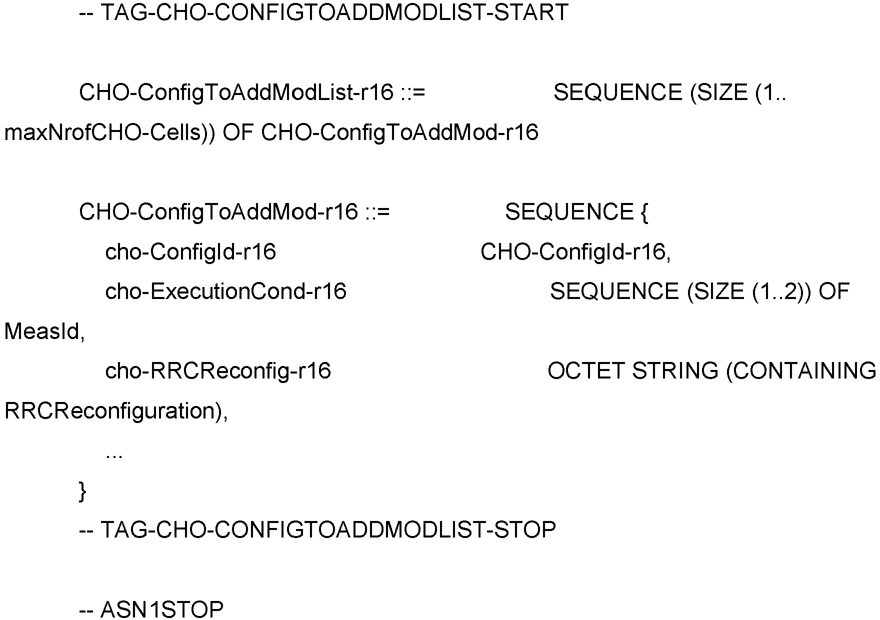

The difference is that the OCTET STRING is generated by the source node and consists of both the updated source cell configuration and also another OCTET STRING generated by the target node consisting of the target cell configuration. The difference needs to be described in procedure text, e.g. in chapter 5.3.5.3 in 38.331:
5.3.5.3 Reception of an *RRCReconfiguration* by the UE

The UE shall perform the following actions upon reception of the *RRCReconfiguration,* or upon execution of the conditional handover:
1> if the *RRCReconfiguration* message includes another *RRCReconfiguration:*
2> perform the actions as specified in 5.3.5.3;

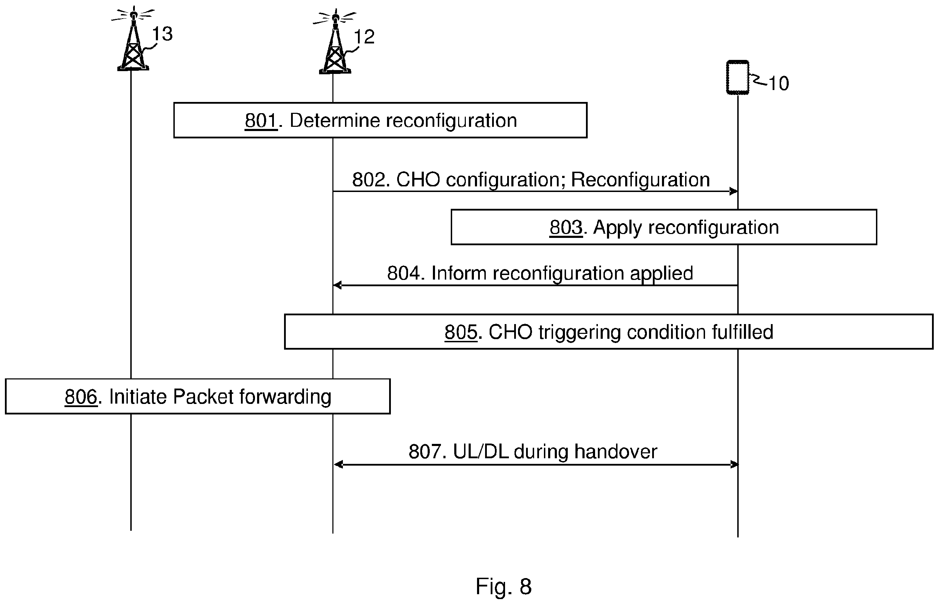

**Fig. 8** is a combined signalling scheme and flowchart according to embodiments herein to perform a handover of the UE 10 from the first radio network node 12 to the target access node 13.

**Action 801.** The first radio network node 12 may determine reconfiguration for the UE e.g. based on a capability of the UE or obtain a default reconfiguration from a network node or upon manufacture.

**Action 802.** The first radio network node 12 transmits the message for the UE 10 with the indication for the reconfiguration, for example the source cell reconfiguration as such or as an index, for communicating with the first radio network node 12 in the first cell 11 during a handover of the UE 10 to the second cell 14. The message may be associated with a conditional DAPS HO or a CHO configuration e.g. the CHO configuration is comprised in the same message or associated with the reconfiguration by index or similar.

**Action 803.** The UE 10 receives and applies the source cell reconfiguration, e.g. a reconfiguration of limited performance e.g. reduced bandwidth, data rate or similar.

**Action 804.** The UE 10 informs, i.e. sends confirmation, the first radio network node 12 that the UE 10 has applied the reconfiguration.

**Action 805.** The CHO triggering condition may then be fulfilled, e.g. based on measured signal strength or quality.

**Action 806.** The first radio network 12 initiates packet forwarding for the UE 10.

**Action 807.** Since the HO is a DAPS HO the UE 10 continues to perform communication, for example, UL communication with the first radio network node during the HO.

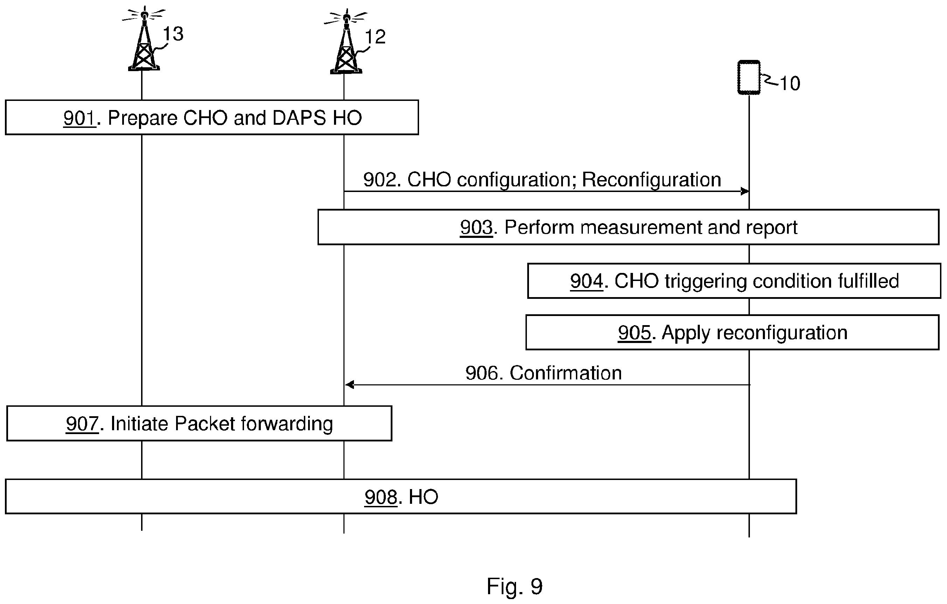

**Fig. 9** is a combined signalling scheme and flowchart according to embodiments herein to perform a handover of the UE 10 from said first radio network node 12 to the second radio network node 13.

**Action 901.** The first radio network node 12 initiates a CHO and DAPS HO by e.g. sending a CHO request to the second radio network node 13 that acknowledges the request.

**Action 902.** The first radio network node 12 may send CHO configuration and the reconfiguration of the source cell 11 to the UE 10. CHO configuration may comprise one or more of the following: a list of target cells; a CHO triggering condition (e.g. thresholds for events A3, A5, etc.) for each target cell; a target cell configuration (e.g. frequency and channel information to be able to perform random access in the target cell and possibly bearers to remove or modify). The reconfiguration may comprise an UL/DL bandwidth of a reduced interval, a maximum number of DL/UL MIMO layers that is reduced compared to previous configuration of the source cell, or reduction of the number of configured Secondary Cells (SCells) used in carrier aggregation.

**Action 903.** The UE 10 may then perform measurements continuously and report measurements back to the first radio network node 12.

**Action 904.** The CHO condition (triggering condition) may then be fulfilled from the measurements.

**Action 905.** The UE 10 then applies the reconfiguration.

**Action 906.** The UE 10 confirms the applied reconfiguration back to the first radio network node 12. The UE may also confirm fulfilment of the CHO condition.

**Action 907.** The first radio network node 12 initiates packet forwarding for the UE 10.

**Action 908.** Continue with the handover signalling. Since the HO is a DAPS HO the UE 10 continues to perform communication e.g. UL and DL communication with the first radio network node during the HO.

It is herein disclosed methods to perform downgrade of source cell configuration when DAPS is combined with conditional handover. A common aspect for all the embodiments is that the source node 12 is informed when the UE 10 applies the source cell reconfiguration, thus ensuring that the source and UE configuration in the source cell 11 can be synchronized.

(Combined DAPS and CHO) A method at a wireless terminal (also called a User Equipment - UE) for performing a mobility procedure, the method comprising:
- Receiving a configuration for a source cell, and storing that configuration upon reception; and, associated with the configuration, a first execution condition configuration (e.g. like a measld associated with at least one event as specified in reportConfig, such as an A3 and/or A5 event) to begin monitoring upon reception;
- Receiving a configuration for at least one candidate target cell, and storing that configuration upon reception; and, associated with that configuration, a second execution condition configuration (e.g. like a measld associated with at least one event as specified in reportConfig, such as an A3 and/or A5 event) to begin monitoring upon reception;
   ∘ In the main alternative, the second execution condition configuration is the same as the first execution condition configuration; If they are the same, a single monitoring process exists.
- Monitoring a first execution condition configuration and upon fulfillment of the execution condition, applying the configuration for a source cell and transmitting an indication to the source node that the UE has applied the configuration for the source cell;
   ∘ If first and second execution conditions are the same, the UE applies the source cell configuration and transmits the indication to the source node before it executes or applies the configuration and/or procedure related to the candidate target cell.

Second embodiment for regular (i.e. non-combined) DAPS handover where the source reconfiguration and the DAPS HO command are sent in the same RRCReconfiguration message and the UE informs the source when it applies the source reconfiguration.

(Only DAPS - single message containing source reconfiguration and target configuration) A method at a wireless terminal (also called a User Equipment - UE) for performing a mobility procedure, the method comprising:
- Receiving a reconfiguration message comprising an indication that this is a DAPS handover;
- Determining that the message includes a reconfiguration for a source cell the UE is connected to (e.g. downgraded configuration); upon determination, applying the received source cell reconfiguration (if the received reconfiguration is a delta configuration it is applied on top of, or added to, the UE's current configuration for the source cell) and transmitting an indication to the source node that the source cell reconfiguration has been applied; After the step, the UE has a new current configuration for the source cell;
   ∘ That determination may be based on an indication that the message contains a reconfiguration for a source cell, which may be a field/parameter included in the message;
- Receiving, in the same reconfiguration message, a reconfiguration for a target cell and upon that, establishing/starting a second protocol stack associated to the target cell, having as configuration for that second stack, the reconfiguration for a target cell applied on top of the UE's current configuration after the previous step;

The method actions performed by the first radio network node 12 for handling communication in the wireless communication network 1 according to embodiments herein will now be described with reference to a flowchart depicted in **Fig. 10****.** The actions do not have to be taken in the order stated below, but may be taken in any suitable order. Actions performed in some embodiments are marked with dashed boxes.

**Action 1000.** The first radio network node 12 may transmit a first configuration for the first cell, and associated with the first configuration, a first execution condition configuration (e.g. like a measld associated with at least one event as specified in reportConfig, such as an A3 and/or A5 event) to begin monitoring of a cell. The first radio network node may further transmit a second configuration for at least one candidate target cells.

**Action 1001.** The first radio network node 12 may further determine the reconfiguration for the first cell 11 based on one or more capabilities of the UE 10 e.g. not to exceed the UE capabilities such as bandwidth, data rate, number of secondary cells etc.

**Action 1002.** The first radio network node 12 transmits, to the UE 10 served by the first radio network node 12 in the first cell 11, the message for the UE 10, including the indication for the reconfiguration for communicating with the first radio network node 12 in the first cell during the handover of the UE 10 to the second cell. The message is associated with a configuration for handing over the UE 10 to the second cell 14 based on whether an execution condition is fulfilled or not, and/or for maintaining a connection to the first cell 11 while a connection to the second cell 14 is being established. That is, the configuration may be indicating a CHO and/or a DAPS handover. The indication may be values of parameters for communicating with the first radio network node 12 and/or an index in a list for retrieving such values. The message may comprise the execution condition, the indication of the reconfiguration, and/or a handover command. The indication may be comprised in a CHO-ConfigToAddModList that concerns a list of CHO configurations to add or modify, with for each entry the cho-ConfigId and the associated cho-CandidateCellConfig. The configuration for handing over the UE 10 to the second cell 14 may comprise a conditional handover list that concerns a list of configurations to add or modify, with for each entry an identification of the configuration and an associated candidate target cell configuration. The first radio network node 12 may transmit the configuration in an RRCReconfiguration message constituting the handover command and including another *RRCReconfiguration* message containing the reconfiguration of the source cell. The reconfiguration for communicating with the first radio network node 12 in the first cell may be associated with the same execution condition as a handover command to the second cell.

**Action 1003.** The first radio network node 12 further receives information, from the UE 10, indicating that the UE 10 has applied the reconfiguration.

The method actions performed by the UE 10 for handling communication in the wireless communication network 1 according to embodiments herein will now be described with reference to a flowchart depicted in **Fig. 11****.** The actions do not have to be taken in the order stated below, but may be taken in any suitable order. Actions performed in some embodiments are marked with dashed boxes.

**Action 1100.** The UE 10 may receive the first configuration for the first cell, and associated with the first configuration, the first execution condition configuration (e.g. like a measld associated with at least one event as specified in reportConfig, such as an A3 and/or A5 event) to begin monitoring of a cell. The UE 10 may further receive the second configuration for at least one candidate target cells.

**Action 1101.** The UE 10 receives from the first radio network node 12 serving the UE 10 in the first cell, the message for the UE 10, including the indication for the reconfiguration for communicating with the first radio network node 12 during a handover of the UE 10 to the second cell 14. The message is associated with the configuration for handing over the UE 10 to the second cell based on whether the execution condition, e.g. the first, is fulfilled or not, and/or for maintaining the connection to the first cell while a connection to the second cell is being established. The message may comprise the execution condition, the indication of the reconfiguration, and/or he handover command. The configuration for handing over the UE 10 to the second cell 14 may comprise the conditional handover list that concerns the list of configurations to add or modify, with for each entry the identification of the configuration and the associated candidate target cell configuration. The configuration may be comprised in the message with the reconfiguration or indication of reconfiguration. The UE 10 may further receive the configuration in an *RRCReconfiguration* message constituting a handover command to the second cell 14 and including another *RRCReconfiguration* message containing the reconfiguration for communicating with the first radio network node 12 in the first cell. E.g. the *RRCReconfiguration* message constituting the DAPS handover command may be an outer RRC message and the *RRCReconfiguration* message containing the source cell reconfiguration may be an inner RRC message.

**Action 1102.** The UE 10 applies the reconfiguration. The UE 10 may apply the reconfiguration after the transmission of an acknowledgement message, and/or before accessing the second cell 14. The reconfiguration for communicating with the first radio network node 12 in the first cell 11 may be associated with the same execution condition as the handover command to the second cell 14 and the reconfiguration may thus be applied just before or at the same time as the handover command at the UE 10. Just before meaning immediately i.e. within a time interval such as a transmission time interval (TTI), a 1ms or similar before applying the handover command. The UE 10 may apply the reconfiguration upon receiving the message, i.e. directly once received such as the reconfiguration for communicating with the first radio network node 12 in the first cell is applied upon reception of the message. Hence, the reconfiguration may be associated with the same execution condition as the handover which causes the reconfiguration to be applied at the same time or immediately before the handover is executed. Alternatively, the reconfiguration and the handover command may be sent together in the same RRC message to the UE 10 and the UE 10 may then apply the reconfiguration immediately while the handover command can be executed later when the execution condition is fulfilled.

**Action 1103.** The UE 10 informs the first radio network node 12 that the reconfiguration is applied at the UE 10.

**Action 1104.** The UE 10 may acknowledge the reception of a candidate target cell configuration by responding with the acknowledgement message such as a RRCReconfigurationComplete message to the first radio network node 12.

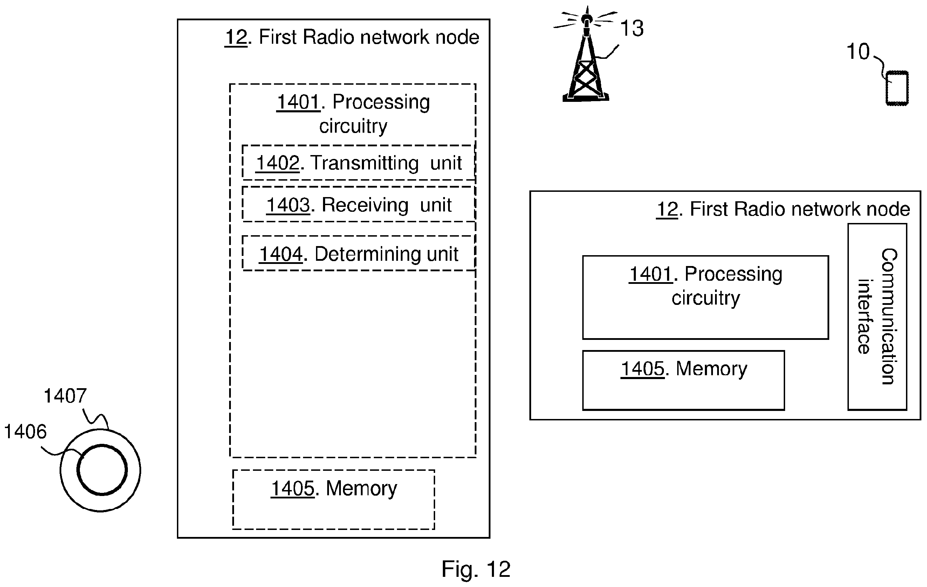

**Fig. 12** is a block diagram depicting the first radio network node 12, in two embodiments, for handling communication, e.g. handling, enabling or performing handover, in the wireless communication network 1 according to embodiments herein.

The first radio network node 12 may comprise **processing circuitry 1401,** e.g. one or more processors, configured to perform the methods herein.

The first radio network node 12 may comprise **a transmitting unit 1402,** e.g. a transmitter or a transceiver. The first radio network node 12, the processing circuitry 1401 and/or the transmitting unit 1402 is configured to transmit to the UE 10 served by the first radio network node 12 in the first cell 11, the message for the UE 10. The message includes the indication for the reconfiguration for communicating with the first radio network node 12 in the first cell during the handover of the UE 10 to the second cell, i.e. includes the source cell reconfiguration. The message is associated with the configuration for handing over the UE to the second cell based on whether the execution condition is fulfilled or not, and/or for maintaining the connection to the first cell while the connection to the second cell is being established. The message may comprise the execution condition, the indication of the reconfiguration, and/or the handover command. The reconfiguration for communicating with the first radio network node 12 in the first cell may be associated with the same execution condition as the handover command to the second cell. The configuration for handing over the UE to the second cell may comprise a conditional handover list that concerns a list of configurations to add or modify, with for each entry an identification of the configuration and an associated candidate target cell configuration. The first radio network node 12, the processing circuitry 1401 and/or the transmitting unit 1402 may be configured to transmit the configuration in the RRCReconfiguration message constituting the handover command to the second cell and including another *RRCReconfiguration* message containing the indication for reconfiguration for communicating with the first radio network node 12 in the first cell.

The first radio network node 12 may comprise **a receiving unit 1403,** e.g. a receiver or a transceiver. The first radio network node 12, the processing circuitry 1401 and/or the receiving unit 1403 is configured to receive information, from the UE 10, indicating that the UE 10 has applied the reconfiguration.

The first radio network node 12 may comprise **a determining unit 1404.** The first radio network node 12, the processing circuitry 1401 and/or the determining unit 1404 may be configured to determine the reconfiguration based on the capability of the UE 10.

The first radio network node 12 further comprises **a memory 1405.** The memory comprises one or more units to be used to store data on, such as indications, strengths or qualities, grants, messages, execution conditions, user data, reconfiguration, configurations, scheduling information, timers, applications to perform the methods disclosed herein when being executed, and similar. The first radio network node 12 comprises a communication interface comprising transmitter, receiver, transceiver and/or one or more antennas. Thus, it is herein provided the first radio network node for handling communication in a wireless communications network, wherein the first radio network node comprises processing circuitry and a memory, said memory comprising instructions executable by said processing circuitry whereby said first radio network node 12 is operative to perform any of the methods herein.

The methods according to the embodiments described herein for the first radio network node 12 are respectively implemented by means of e.g. **a computer program product 1406** or a computer program product, comprising instructions, i.e., software code portions, which, when executed on at least one processor, cause the at least one processor to carry out the actions described herein, as performed by the first radio network node 12. The computer program product 1406 may be stored on **a computer-readable storage medium 1407,** e.g. a universal serial bus (USB) stick, a disc or similar. The computer-readable storage medium 1407, having stored thereon the computer program product, may comprise the instructions which, when executed on at least one processor, cause the at least one processor to carry out the actions described herein, as performed by the first radio network node 12. In some embodiments, the computer-readable storage medium may be a non-transitory or transitory computer-readable storage medium.

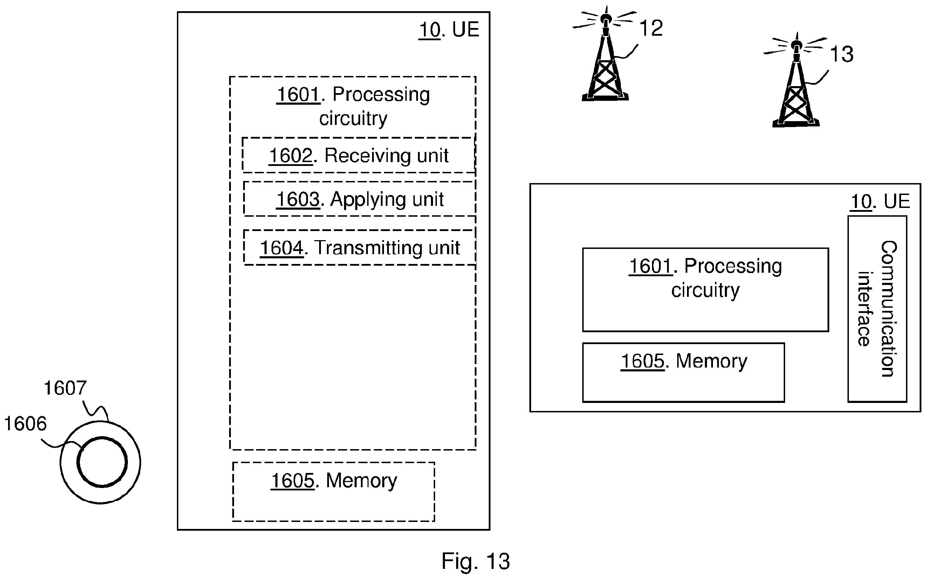

**Fig. 13** is a block diagram depicting the UE 10 for handling communication, e.g. handling, enabling or performing handover, in the wireless communication network 1 according to embodiments herein.

The UE 10 may comprise **processing circuitry 1601,** e.g. one or more processors, configured to perform the methods herein.

The UE 10 may comprise **a receiving unit 1602,** e.g. a receiver or a transceiver. The UE 10, the processing circuitry 1601 and/or the receiving unit 1602 is configured to receive, from the first radio network node 12 serving the UE 10 in the first cell, the message for the UE. The message includes the indication for the reconfiguration for communicating with the first radio network node 12 in the first cell during the handover of the UE 10 to the second cell 14, wherein the message is associated with the configuration for handing over the UE 10 to the second cell based on whether the execution condition is fulfilled or not, and/or for maintaining the connection to the first cell while the connection to the second cell is being established. The message may further comprise the execution condition, the indication for reconfiguration and/or the handover command. The configuration for handing over the UE to the second cell may comprise the conditional handover list that concerns the list of configurations to add or modify, with for each entry the identification of the configuration and the associated candidate target cell configuration. The UE 10, the processing circuitry 1601 and/or the receiving unit 1602 may be configured to receive the configuration in an *RRCReconfiguration* message constituting the handover command to the second cell and including another *RRCReconfiguration* message containing the reconfiguration for communicating with the first radio network node 12 in the first cell.

The UE 10 may comprise **an applying unit 1603.** The UE 10, the processing circuitry 1601 and/or the applying unit 1603 may be configured to apply the reconfiguration. The reconfiguration for communicating with the first radio network node 12 in the first cell may be associated with the same execution condition as the handover command to the second cell and the UE 10, the processing circuitry 1601 and/or the applying unit 1603 may be configured to apply the reconfiguration just before or at the same time as the handover command at the UE 10. The UE 10, the processing circuitry 1601 and/or the applying unit 1603 may be configured to apply the reconfiguration for communicating with the first radio network node 12 in the first cell upon reception of the message. The UE 10, the processing circuitry 1601 and/or the applying unit 1603 may be configured to apply the reconfiguration after the transmission of an acknowledgment message, and/or before accessing the second cell.

The UE 10 may comprise **a transmitting unit 1604,** e.g. a transmitter or a transceiver. The first radio network node 12, the processing circuitry 1601 and/or the transmitting unit 1604 is configured to inform, e.g. transmit indication, the first radio network node that the reconfiguration is applied at the UE. The first radio network node 12, the processing circuitry 1601 and/or the transmitting unit 1604 may be configured to acknowledge the reception of the candidate target cell configuration by responding with an acknowledgement message to the first radio network node 12.

The UE 10 further comprises **a memory 1605.** The memory comprises one or more units to be used to store data on, such as indications, strengths or qualities, grants, indications, reconfiguration, configuration, values, scheduling information, timers, applications to perform the methods disclosed herein when being executed, and similar. The UE 10 comprises a communication interface comprising transmitter, receiver, transceiver and/or one or more antennas. Thus, it is herein provided the UE 10 for handling communication in a wireless communications network, wherein the UE 10 comprises processing circuitry and a memory, said memory comprising instructions executable by said processing circuitry whereby said UE 10 is operative to perform any of the methods herein.

The methods according to the embodiments described herein for the UE 10 are respectively implemented by means of e.g. **a computer program product 1606** or a computer program product, comprising instructions, i.e., software code portions, which, when executed on at least one processor, cause the at least one processor to carry out the actions described herein, as performed by the UE 10. The computer program product 1606 may be stored on **a computer-readable storage medium 1607,** e.g. a universal serial bus (USB) stick, a disc or similar. The computer-readable storage medium 1607, having stored thereon the computer program product, may comprise the instructions which, when executed on at least one processor, cause the at least one processor to carry out the actions described herein, as performed by the UE 10. In some embodiments, the computer-readable storage medium may be a non-transitory or transitory computer-readable storage medium.

In some embodiments a more general term "radio network node" is used and it can correspond to any type of radio network node or any network node, which communicates with a wireless device and/or with another network node. Examples of network nodes are NodeB, Master eNB, Secondary eNB, a network node belonging to Master cell group (MCG) or Secondary Cell Group (SCG), base station (BS), multistandard radio (MSR) radio node such as MSR BS, eNodeB, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node e.g. Mobility Switching Centre (MSC), Mobile Management Entity (MME) etc., Operation and Maintenance (O&M), Operation Support System (OSS), Self-Organizing Network (SON), positioning node e.g. Evolved Serving Mobile Location Centre (E-SMLC), Minimizing Drive Test (MDT) etc.

In some embodiments the non-limiting term wireless device or user equipment (UE) is used and it refers to any type of wireless device communicating with a network node and/or with another UE in a cellular or mobile communication system. Examples of UE are target device, device-to-device (D2D) UE, proximity capable UE (aka ProSe UE), machine type UE or UE capable of machine to machine (M2M) communication, PDA, PAD, Tablet, mobile terminals, smart phone, laptop embedded equipped (LEE), laptop mounted equipment (LME), USB dongles etc.

The embodiments are described for 5G. However the embodiments are applicable to any RAT or multi-RAT systems, where the UE receives and/or transmit signals (e.g. data) e.g. LTE, LTE FDD/TDD, WCDMA/HSPA, GSM/GERAN, Wi Fi, WLAN, CDMA2000 etc.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance trade-offs inherent in these design choices.

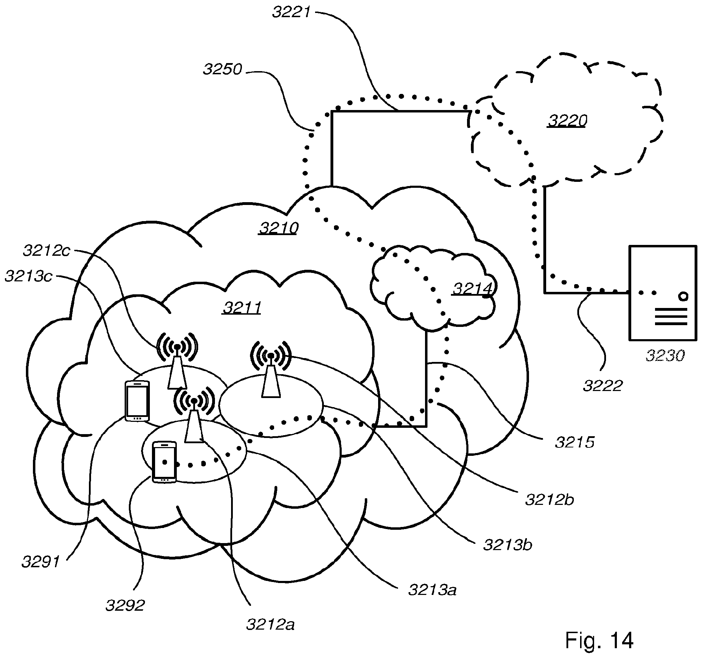

With reference to **Fig 14****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the UE 10, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 14 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signalling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

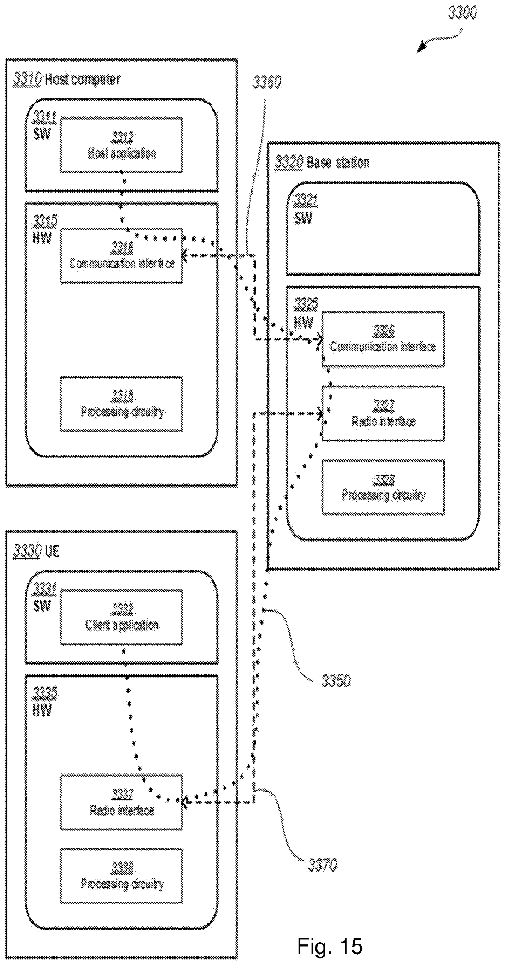

Example implementations, in accordance with an embodiment, of the UE, base station and host computer discussed in the preceding paragraphs will now be described with reference to **Fig. 15****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig.15) served by the base station 3320. The communication interface 3326 may be configured to facilitate a connection 3360 to the host computer 3310. The connection 3360 may be direct or it may pass through a core network (not shown in Fig.15) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig. 15 may be identical to the host computer 3230, one of the base stations 3212a, 3212b, 3212c and one of the UEs 3291, 3292 of Fig. 14, respectively. This is to say, the inner workings of these entities may be as shown in Fig. 15 and independently, the surrounding network topology may be that of Fig. 14.

In Fig. 15, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may achieving both high reliability and low data interruption (0ms or close to 0ms), and at the same time keep the transport network load at an acceptable low level caused by forwarding of DL data packets and thereby provide benefits such as improved battery time, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signalling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

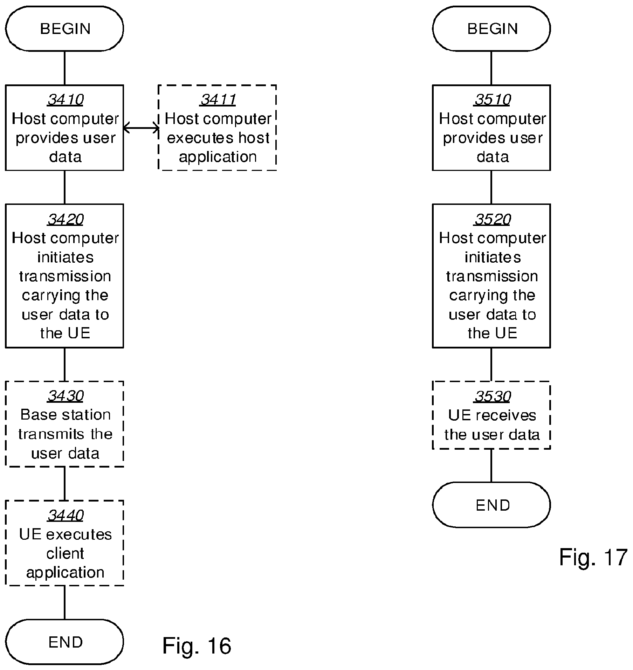

**Fig. 16** is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 16 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 17** is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 17 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

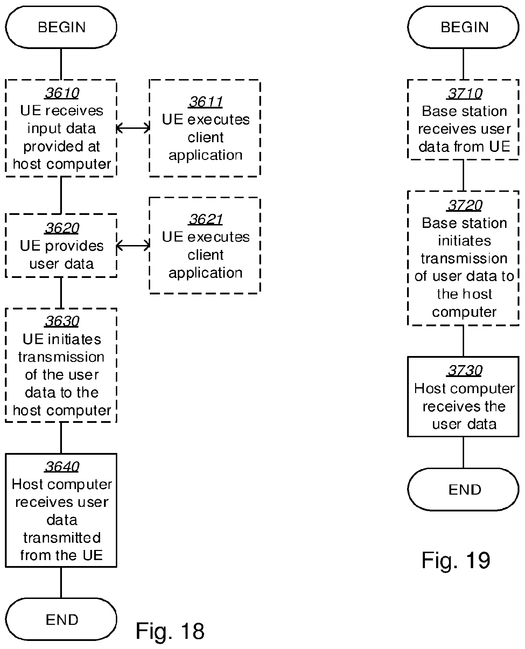

**Fig. 18** is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 18 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 19** is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 19 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It will be appreciated that the foregoing description and the accompanying drawings represent non-limiting examples of the methods and apparatus taught herein. As such, the apparatuses and techniques taught herein are not limited by the foregoing description and accompanying drawings. Instead, the embodiments herein are limited only by the appended claims.

| Abbreviation | Explanation |
|---|---|
| 3GPP | 3rd Generation Partnership Project |
| 5G | 5th Generation |
| 5GS | 5G System |
| 5GC | 5G Core network |
| CHO | Conditional Handover |
| CR | Change Request |
| DAPS | Dual Active Protocol Stack |
| DRB | Data Radio Bearer |

| | |
|---|---|
| E-UTRAN | Evolved Universal Terrestrial Access Network |
| gNB | 5G Node B |
| HO | Handover |
| LTE | Long-term Evolution |
| NG | The interface/reference point between the RAN and the CN in 5G/NR |
| NG-C | The control plane part of NG (between a gNB and an AMF). |
| NG-U | The user plane part of NG (between a gNB and a UPF). |
| NG-RAN | Next Generation Radio Access Network |
| NR | New Radio |
| PDCP | Packet Data Convergence Protocol |
| PDU | Protocol Data Unit |
| RAN | Radio Access Network |
| RB | Radio Bearer |
| RLC | Radio Link Control |
| ROHC | Robust Header Compression |
| RRC | Radio Resource Control |
| SDU | Service Data Unit |
| SGW | Serving Gateway |
| SN | Sequence Number |
| TS | Technical Specification |
| UE | User Equipment |
| UL | Uplink |
| UPF | User Plane Function |
| Xn | The interface/reference point between two gNBs |

### References:

[1] 3GPP TS 38.331, NR RRC protocol specification, v15.7.0
[2] 3GPP TS 36.331, LTE RRC protocol specification, v15.7.0

## Claims

1. A method performed by a first radio network node (12) for handling communication in a wireless communication network, the method comprising:
- *transmitting* (1002), to a user equipment, UE, (10) served by the first radio network node in a first cell (11), a message for the UE (10), including an indication for a reconfiguration for communicating with the first radio network node (12) in the first cell during a handover of the UE (10) to a second cell, wherein the indication for the reconfiguration comprises an indication to downgrade a source cell configuration of the UE (10) for communicating with the first radio network node (12), and wherein the message is associated with a configuration for handing over the UE to the second cell based on whether an execution condition is fulfilled or not, and for maintaining a connection to the first cell (11) while a connection to the second cell (14) is being established; and
- *receiving* (1003) information, from the UE (10), comprising an acknowledgement indicating that the UE (10) has applied the reconfiguration to downgrade the source cell configuration.

2. The method according to claim 1, wherein the message comprises the execution condition, the indication for the reconfiguration, and/or a handover command.

3. The method according to any of the claims 1-2, wherein the reconfiguration for communicating with the first radio network node (12) in the first cell is associated with the same execution condition as a handover command to the second cell.

4. The method according to any of the claims 1-3, wherein the configuration for handing over the UE (10) to the second cell (14) comprises a conditional handover list that concerns a list of configurations to add or modify, with for each entry an identification of the configuration and an associated candidate target cell configuration.

5. The method according to any of the claims 1-4, further comprising
- *determining* (1001) the reconfiguration based on a capability of the UE (10).

6. The method according to any of the claims 1-5, further comprising transmitting the configuration in an *RRCReconfiguration* message constituting a handover command to the second cell and including another *RRCReconfiguration* message containing the indication for the reconfiguration for communicating with the first radio network node (12) in the first cell.

7. A method performed by a user equipment, UE, (10) for handling communication in a wireless communication network, the method comprising:
- *receiving* (1101), from a first radio network node (12) serving the UE (10) in a first cell, a message for the UE (10), including an indication for a reconfiguration for communicating with the first radio network node (12) in the first cell during a handover of the UE (10) to a second cell (14), wherein the indication for the reconfiguration comprises an indication to downgrade a source cell configuration of the UE (10) for communicating with the first radio network node (12), and wherein the message is associated with a configuration for handing over the UE (10) to a second cell based on whether an execution condition is fulfilled or not, and for maintaining a connection to the first cell while a connection to the second cell is being established;
- *applying* (1102) the reconfiguration; and
- *informing* (1103) the first radio network node that the reconfiguration is applied at the UE.

8. The method according to claim 7, wherein the message comprises the execution condition, the indication for the reconfiguration, and/or a handover command.

9. The method according to any of the claims 7-8, wherein the reconfiguration for communicating with the first radio network node (12) in the first cell is associated with the same execution condition as a handover command to the second cell, and the reconfiguration is applied just before or at the same time as the handover command at the UE (10).

10. The method according to any of the claims 7-8, wherein the reconfiguration for communicating with the first radio network node (12) in the first cell is applied upon reception of the message.

11. The method according to any of the claims 7-10, wherein the configuration for handing over the UE (10) to the second cell comprises a conditional handover list that concerns a list of configurations to add or modify, with for each entry an identification of the configuration and an associated candidate target cell configuration.

12. The method according to any of the claims 7-11, further comprising
- *acknowledging* (1104) a reception of a candidate target cell configuration by responding with an acknowledgement message to the first radio network node (12).

13. The method according to any of the claims 7-12, wherein applying (1102) the reconfiguration is performed after the transmission of an acknowledgement message, and/or before accessing the second cell.

14. The method according to any of the claims 7-13, further comprises receiving the configuration in an *RRCReconfiguration* message constituting a handover command to the second cell and including another *RRCReconfiguration* message containing the reconfiguration for communicating with the first radio network node (12) in the first cell.

15. A first radio network node (12) for handling communication in a wireless communication network, wherein the first radio network node is configured to:
transmit, to a user equipment, UE, (10) served by the first radio network node in a first cell (11), a message for the UE (10), including an indication for a reconfiguration for communicating with the first radio network node (12) in the first cell during a handover of the UE (10) to a second cell, wherein the indication for the reconfiguration comprises an indication to downgrade a source cell configuration of the UE (10) for communicating with the first radio network node (12), and wherein the message is associated with a configuration for handing over the UE to the second cell based on whether an execution condition is fulfilled or not, and for maintaining a connection to the first cell while a connection to the second cell is being established; and
receive information, from the UE (10), comprising an acknowledgement indicating that the UE (10) has applied the reconfiguration to downgrade the source cell configuration.

16. A user equipment, UE, (10) for handling communication in a wireless communication network, wherein the UE (10) is configured to
receive, from a first radio network node (12) serving the UE (10) in a first cell, a message for the UE, including an indication for a reconfiguration for communicating with the first radio network node (12) in the first cell during a handover of the UE (10) to a second cell (14), wherein the indication for the reconfiguration comprises an indication to downgrade a source cell configuration of the UE (10) for communicating with the first radio network node (12), and wherein the message is associated with a configuration for handing over the UE (10) to a second cell based on whether an execution condition is fulfilled or not, and for maintaining a connection to the first cell while a connection to the second cell is being established;
apply the reconfiguration; and
inform the first radio network node that the reconfiguration is applied at the UE.

## Patentansprüche

1. Verfahren, das von einem ersten Funknetzwerkknoten (12) durchgeführt wird, zur Handhabung von Kommunikation in einem Drahtloskommunikationsnetzwerk, wobei das Verfahren umfasst:
- Senden (1002) einer Nachricht für eine Benutzereinrichtung, UE, (10), die eine Anzeige für eine Rekonfiguration zum Kommunizieren mit dem ersten Funknetzwerkknoten (12) in der ersten Zelle während einer Weitergabe der UE (10) an eine zweite Zelle umfasst, an die UE (10), die vom ersten Funknetzwerkknoten (11) bedient wird, wobei die Anzeige zur Rekonfiguration eine Anzeige zum Herabstufen einer Quellzellenkonfiguration der UE (10) zum Kommunizieren mit dem ersten Funknetzwerkknoten (12) umfasst, und wobei die Nachricht mit einer Konfiguration zum Weitergeben der UE an die zweite Zelle (11) basierend darauf, ob eine Ausführungsbedingung erfüllt wird oder nicht, und zum Aufrechterhalten einer Verbindung mit der ersten Zelle während des Aufbaus einer Verbindung mit der zweiten Zelle (14) assoziiert ist; und
- Empfangen (1003) von Informationen von der UE (10), die eine Anzeige umfassen, dass die UE (10) die Rekonfiguration zum Herabstufen der Quellzellenkonfiguration angewendet hat.

2. Verfahren nach Anspruch 1, wobei die Nachricht die Ausführungsbedingung, die Anzeige zur Rekonfiguration und/oder einen Weitergabebefehl umfasst.

3. Verfahren nach einem der Ansprüche 1 bis 2, wobei die Rekonfiguration zum Kommunizieren mit dem ersten Funknetzwerkknoten (12) in der ersten Zelle mit der gleichen Ausführungsbedingung assoziiert ist wie ein Weitergabebefehl an die zweite Zelle.

4. Verfahren nach einem der Ansprüche 1 bis 3, wobei die Konfiguration zum Weitergeben der UE (10) an die zweite Zelle (14) eine Liste bedingter Weitergabe umfasst, die eine Liste von hinzufügenden oder zu modifizierenden Konfigurationen mit einer Identifikation der Konfiguration und einer zugehörigen Kandidaten-Zielzellenkonfiguration für jeden Eintrag betrifft.

5. Verfahren nach einem der Ansprüche 1 bis 4, ferner umfassend:
- Bestimmen (1001) der Rekonfiguration basierend auf einer Fähigkeit der UE (10).

6. Verfahren nach einem der Ansprüche 1 bis 5, ferner umfassend ein Senden der Konfiguration in einer RRCReconfiguration-Nachricht, die einen Weitergabebefehl an die zweite Zelle darstellt, und umfassend eine weitere RRCReconfiguration-Nachricht, die die Anzeige zur Rekonfiguration zum Kommunizieren mit dem ersten Funknetzwerkknoten (12) in der ersten Zelle enthält.

7. Verfahren, das von einer Benutzereinrichtung, UE, (10) durchgeführt wird, zur Handhabung von Kommunikation in einem Drahtloskommunikationsnetzwerk, wobei das Verfahren umfasst:
- Empfangen (1101) einer Nachricht für die UE (10), die eine Anzeige für eine Rekonfiguration zum Kommunizieren mit einem ersten Funknetzwerkknoten (12) in der ersten Zelle während einer Weitergabe der UE (10) an eine zweite Zelle (14) umfasst, vom ersten Funknetzwerkknoten (12), wobei die Anzeige zur Rekonfiguration eine Anzeige zum Herabstufen einer Quellzellenkonfiguration der UE (10) zum Kommunizieren mit dem ersten Funknetzwerkknoten (12) umfasst, und wobei die Nachricht mit einer Konfiguration zum Weitergeben der UE (10) an eine zweite Zelle basierend darauf, ob eine Ausführungsbedingung erfüllt wird oder nicht, und zum Aufrechterhalten einer Verbindung mit der ersten Zelle während des Aufbaus einer Verbindung mit der zweiten Zelle assoziiert ist; und
- Anwenden (1102) der Rekonfiguration; und
- Informieren (1103) des ersten Funknetzwerkknotens, dass die Rekonfiguration an der UE angewendet wird.

8. Verfahren nach Anspruch 7, wobei die Nachricht die Ausführungsbedingung, die Anzeige zur Rekonfiguration und/oder einen Weitergabebefehl umfasst.

9. Verfahren nach einem der Ansprüche 7 bis 8, wobei die Rekonfiguration zum Kommunizieren mit dem ersten Funknetzwerkknoten (12) in der ersten Zelle mit der gleichen Ausführungsbedingung assoziiert ist wie ein Weitergabebefehl an die zweite Zelle und die Rekonfiguration unmittelbar vor oder zu dem gleichen Zeitpunkt wie der Weitergabebefehl an der UE (10) angewendet wird.

10. Verfahren nach einem der Ansprüche 7 bis 8, wobei die Rekonfiguration zum Kommunizieren mit dem ersten Funknetzwerkknoten (12) in der ersten Zelle bei Empfang der Nachricht angewendet wird.

11. Verfahren nach einem der Ansprüche 7 bis 10, wobei die Konfiguration zum Weitergeben der UE (10) an die zweite Zelle eine Liste bedingter Weitergabe umfasst, die eine Liste von hinzufügenden oder zu modifizierenden Konfigurationen mit einer Identifikation der Konfiguration und einer zugehörigen Kandidaten-Zielzellenkonfiguration für jeden Eintrag betrifft.

12. Verfahren nach einem der Ansprüche 7 bis 11, ferner umfassend:
- Bestätigen (1104) eines Empfangs einer Kandidaten-Zielzellenkonfiguration durch Antworten mit einer Bestätigungsnachricht an den ersten Funknetzwerkknoten (12).

13. Verfahren nach einem der Ansprüche 7 bis 12, wobei das Anwenden (1102) der Rekonfiguration nach der Übertragung einer Bestätigungsnachricht und/oder vor dem Zugriff auf die zweite Zelle durchgeführt wird.

14. Verfahren nach einem der Ansprüche 7 bis 13, ferner umfassend ein Empfangen der Konfiguration in einer RRCReconfiguration-Nachricht, die einen Weitergabebefehl an die zweite Zelle darstellt, und umfassend eine weitere RRCReconfiguration-Nachricht, die die Rekonfiguration zum Kommunizieren mit dem ersten Funknetzwerkknoten (12) in der ersten Zelle enthält.

15. Erster Funknetzwerkknoten (12) zum Handhaben von Kommunikation in einem Drahtloskommunikationsnetzwerk, wobei der Funknetzwerkknoten konfiguriert ist zum:
Senden einer Nachricht für eine Benutzereinrichtung, UE, (10), die eine Anzeige für eine Rekonfiguration zum Kommunizieren mit dem ersten Funknetzwerkknoten (12) in der ersten Zelle während einer Weitergabe der UE (10) an eine zweite Zelle umfasst, an die UE (10), die vom ersten Funknetzwerkknoten (11) bedient wird, wobei die Anzeige zur Rekonfiguration eine Anzeige zum Herabstufen einer Quellzellenkonfiguration der UE (10) zum Kommunizieren mit dem ersten Funknetzwerkknoten (12) umfasst, und wobei die Nachricht mit einer Konfiguration zum Weitergeben der UE an die zweite Zelle basierend darauf, ob eine Ausführungsbedingung erfüllt wird oder nicht, und zum Aufrechterhalten einer Verbindung mit der ersten Zelle während des Aufbaus einer Verbindung mit der zweiten Zelle assoziiert ist; und
Empfangen von Informationen von der UE (10), die eine Anzeige umfassen, dass die UE (10) die Rekonfiguration zum Herabstufen der Quellzellenkonfiguration angewendet hat.

16. Benutzereinrichtung, UE, (10) zum Handhaben von Kommunikation in einem Drahtloskommunikationsnetzwerk, wobei die UE (10) konfiguriert ist zum:
Empfangen einer Nachricht für die UE (10), die eine Anzeige für eine Rekonfiguration zum Kommunizieren mit einem ersten Funknetzwerkknoten (12) in der ersten Zelle während einer Weitergabe der UE (10) an eine zweite Zelle (14) umfasst, vom ersten Funknetzwerkknoten (12), wobei die Anzeige zur Rekonfiguration eine Anzeige zum Herabstufen einer Quellzellenkonfiguration der UE (10) zum Kommunizieren mit dem ersten Funknetzwerkknoten (12) umfasst, und wobei die Nachricht mit einer Konfiguration zum Weitergeben der UE (10) an eine zweite Zelle basierend darauf, ob eine Ausführungsbedingung erfüllt wird oder nicht, und zum Aufrechterhalten einer Verbindung mit der ersten Zelle während des Aufbaus einer Verbindung mit der zweiten Zelle assoziiert ist; und
Anwenden der Rekonfiguration; und
Informieren des ersten Funknetzwerkknotens, dass die Rekonfiguration an der UE angewendet wird.

## Revendications

1. Procédé réalisé par un premier noeud de réseau radio (12) pour une gestion de communication dans un réseau de communication sans fil, le procédé comprenant :
- la transmission (1002), à un équipement utilisateur, UE, (10) desservi par le premier noeud de réseau radio dans une première cellule (11), d'un message pour l'UE (10), incluant une indication d'une reconfiguration pour la communication avec le premier noeud de réseau radio (12) dans la première cellule au cours d'un transfert intercellulaire de l'UE (10) à une deuxième cellule, dans lequel l'indication de la reconfiguration comprend une indication de rétrograder une configuration de cellule source de l'UE (10) pour la communication avec le premier noeud de réseau radio (12), et dans lequel le message est associé à une configuration pour le transfert intercellulaire de l'UE à la deuxième cellule sur la base de la satisfaction ou non d'une condition d'exécution, et pour le maintien d'une connexion à la première cellule (11) pendant qu'une connexion à la deuxième cellule (14) est en cours d'établissement ; et
- la réception (1003) d'informations, depuis l'UE (10), comprenant un accusé de réception indiquant que l'UE (10) a appliqué la reconfiguration pour rétrograder la configuration de cellule source.

2. Procédé selon la revendication 1, dans lequel le message comprend la condition d'exécution, l'indication de la reconfiguration, et/ou une instruction de transfert intercellulaire.

3. Procédé selon la revendication 1 ou 2, dans lequel la reconfiguration pour la communication avec le premier noeud de réseau radio (12) dans la première cellule est associée à la même condition d'exécution qu'une instruction de transfert intercellulaire à la deuxième cellule.

4. Procédé selon l'une quelconque des revendications 1 à 3, dans lequel la configuration pour le transfert intercellulaire de l'UE (10) à la deuxième cellule (14) comprend une liste de transferts intercellulaires conditionnels qui concerne une liste de configurations à ajouter ou à modifier, avec, pour chaque entrée, une identification de la configuration et une configuration de cellule cible candidate associée.

5. Procédé selon l'une quelconque des revendications 1 à 4, comprenant en outre
- la détermination (1001) de la reconfiguration sur la base d'une capacité de l'UE (10).

6. Procédé selon l'une quelconque des revendications 1 à 5, comprenant en outre la transmission de la configuration dans un message RRCReconfiguration constituant une instruction de transfert intercellulaire à la deuxième cellule et incluant un autre message RRCReconfiguration contenant l'indication de la reconfiguration pour la communication avec le premier noeud de réseau radio (12) dans la première cellule.

7. Procédé réalisé par un équipement utilisateur, UE, (10) pour une gestion de communication dans un réseau de communication sans fil, le procédé comprenant :
- la réception (1101), depuis un premier noeud de réseau radio (12) desservant l'UE (10) dans une première cellule, d'un message pour l'UE (10), incluant une indication d'une reconfiguration pour la communication avec le premier noeud de réseau radio (12) dans la première cellule au cours d'un transfert intercellulaire de l'UE (10) à une deuxième cellule (14), dans lequel l'indication de la reconfiguration comprend une indication de rétrograder une configuration de cellule source de l'UE (10) pour la communication avec le premier noeud de réseau radio (12), et dans lequel le message est associé à une configuration pour le transfert intercellulaire de l'UE (10) à une deuxième cellule sur la base de la satisfaction ou non d'une condition d'exécution, et pour le maintien d'une connexion à la première cellule pendant qu'une connexion à la deuxième cellule est en cours d'établissement ;
- l'application (1102) de la reconfiguration ; et
- l'information (1103) du premier noeud de réseau radio que la reconfiguration est appliquée à l'UE.

8. Procédé selon la revendication 7, dans lequel le message comprend la condition d'exécution, l'indication de la reconfiguration, et/ou une instruction de transfert intercellulaire.

9. Procédé selon la revendication 7 ou 8, dans lequel la reconfiguration pour la communication avec le premier noeud de réseau radio (12) dans la première cellule est associée à la même condition d'exécution qu'une instruction de transfert intercellulaire à la deuxième cellule, et la reconfiguration est appliquée juste avant ou en même temps que l'instruction de transfert intercellulaire au niveau de l'UE (10).

10. Procédé selon la revendication 7 ou 8, dans lequel la reconfiguration pour la communication avec le premier noeud de réseau radio (12) dans la première cellule est appliquée à la réception du message.

11. Procédé selon l'une quelconque des revendications 7 à 10, dans lequel la configuration pour le transfert intercellulaire de l'UE (10) à la deuxième cellule comprend une liste de transferts intercellulaires conditionnels qui concerne une liste de configurations à ajouter ou à modifier, avec, pour chaque entrée, une identification de la configuration et une configuration de cellule cible candidate associée.

12. Procédé selon l'une quelconque des revendications 7 à 11, comprenant en outre
- l'accusé de réception (1104) d'une réception d'une configuration de cellule cible candidate par la réponse avec un message d'accusé de réception au premier noeud de réseau radio (12).

13. Procédé selon l'une quelconque des revendications 7 à 12, dans lequel l'application (1102) de la reconfiguration est réalisée après la transmission d'un message d'accusé de réception, et/ou avant l'accès à la deuxième cellule.

14. Procédé selon l'une quelconque des revendications 7 à 13, comprenant en outre la réception de la configuration dans un message RRCReconfiguration constituant une instruction de transfert intercellulaire à la deuxième cellule et incluant un autre message RRCReconfiguration contenant la reconfiguration pour la communication avec le premier noeud de réseau radio (12) dans la première cellule.

15. Premier noeud de réseau radio (12) pour une gestion de communication dans un réseau de communication sans fil, dans lequel le premier noeud de réseau radio est configuré pour :
transmettre, à un équipement utilisateur, UE, (10) desservi par le premier noeud de réseau radio dans une première cellule (11), un message pour l'UE (10), incluant une indication d'une reconfiguration pour la communication avec le premier noeud de réseau radio (12) dans la première cellule au cours d'un transfert intercellulaire de l'UE (10) à une deuxième cellule, dans lequel l'indication de la reconfiguration comprend une indication de rétrograder une configuration de cellule source de l'UE (10) pour la communication avec le premier noeud de réseau radio (12), et dans lequel le message est associé à une configuration pour le transfert intercellulaire de l'UE à la deuxième cellule sur la base de la satisfaction ou non d'une condition d'exécution, et pour le maintien d'une connexion à la première cellule pendant qu'une connexion à la deuxième cellule est en cours d'établissement ; et
recevoir des informations, depuis l'UE (10), comprenant un accusé de réception indiquant que l'UE (10) a appliqué la reconfiguration pour rétrograder la configuration de cellule source.

16. Equipement utilisateur, UE, (10) pour une gestion de communication dans un réseau de communication sans fil, dans lequel l'UE (10) est configuré pour
recevoir, depuis un premier noeud de réseau radio (12) desservant l'UE (10) dans une première cellule, un message pour l'UE, incluant une indication d'une reconfiguration pour la communication avec le premier noeud de réseau radio (12) dans la première cellule au cours d'un transfert intercellulaire de l'UE (10) à une deuxième cellule (14), dans lequel l'indication de la reconfiguration comprend une indication de rétrograder une configuration de cellule source de l'UE (10) pour la communication avec le premier noeud de réseau radio (12), et dans lequel le message est associé à une configuration pour le transfert intercellulaire de l'UE (10) à une deuxième cellule sur la base de la satisfaction ou non d'une condition d'exécution, et pour le maintien d'une connexion à la première cellule pendant qu'une connexion à la deuxième cellule est en cours d'établissement ;
appliquer la reconfiguration ; et
informer le premier noeud de réseau radio que la reconfiguration est appliquée à l'UE.
